(19) Europäisches Patentamt
European Patent Office
Office européen des brevets

(11) **EP 2 924 460 A1**

(12) **EUROPÄISCHE PATENTANMELDUNG**

(43) Veröffentlichungstag:
**30.09.2015 Patentblatt 2015/40**

(21) Anmeldenummer: **14161559.1**

(22) Anmeldetag: **25.03.2014**

(51) Int Cl.:
**G01S 17/10** *(2006.01)* **G01S 17/46** *(2006.01)*
**G01N 21/17** *(2006.01)* **G01S 7/487** *(2006.01)*
**G01S 7/497** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **ELMOS Semiconductor AG**
**44227 Dortmund (DE)**

(72) Erfinder:
• **Melcher, Dr. Rolf**
**76227 Karlsruhe (DE)**
• **Münzer, Roland**
**75179 Pforzheim (DE)**

(74) Vertreter: **Durm & Partner**
**Patentanwälte**
**Moltkestrasse 45**
**76133 Karlsruhe (DE)**

(54) **Sensorsystem zur Erkennung mindestens eines Objekts in einer Übertragungsstrecke mittels einer Diode**

(57)     Ein Sensorsystem zur Erkennung mindestens eines Objekts (O1, 02) in einer Übertragungsstrecke (I) umfasst mindestens einen Sender (H) und mindestens einen Empfänger (D). Der Sender (H) wird mit einem Speisesignal (S5) angesteuert, um ein Sendesignal (S21) in die Übertragungsstrecke (I) hinein zu senden, das nach Durchgang und Beeinflussung durch ein Objekt (O1, 02) als modifiziertes Sendesignal (S21) zumindest zu einem Empfänger (D) gelangt. Der Empfänger (D) empfängt es als modifiziertes Empfangssignal (S22) und bildet ein Empfängerausgangssignal (S0) mit einem modifizierten Empfängerausgangssignalanteil (S0e).

Eine Signal-Erzeugungs-Einheit mit einem Wavelet-Generator (WG) erzeugt wenigstens ein Wavelet-Signal ($s_{i,j}(t)$) als Basissignal, das in einer Verarbeitungseinheit (LF) zu einem das Empfängerausgangssignal (S0) umfassenden Verarbeitungszwischensignal weiterverarbeitet wird. Die Verarbeitungseinheit separiert einen modifizierten Empfängerausgangssignalanteil (S0e) und erzeugt daraus eine Regelwert-Matrix ($YI_{i,j}$) mit Regelwert-Signalen ($yi_{i,j}(t)$), aus denen mittels einer Rücktransformations-Einheit ein Speisesignal (S5) oder ein Kompensationsspeisesignal (S3) erzeugt wird. Die Rückführung des Kompensationsspeisesignals (S3) erfolgt in das Sensorsystem (1). Die Rücktransformations-Einheit regelt das Sensorsystem stabil aus.

Der Empfänger (D) umfasst eine Avalanche-Diode (AVD), deren Empfängerausgangssignal (S0) durch Modulation der Sperrspannung mit einer vorbestimmten Modulationsfrequenz auf eine vorbestimmte Zwischenfrequenz gewandelt wird, oder eine Drift-Field-Diode (DFD), in der ein Element der Verarbeitungseinheit (LF) integriert ist.

Fig. 5

**Beschreibung**

Die vorliegende Erfindung betrifft ein Sensorsystem zur Erkennung mindestens eines Objekts in einer Übertragungsstrecke, die eine erste Übertragungsstrecke und eine zweite Übertragungsstrecke einschließt, zwischen einem Sender und einem Empfänger. Das Sensorsystem umfasst mindestens einen Sender, der mit einem Speisesignal angesteuert wird, um zumindest ein bekanntes Sendesignal des Senders in die Übertragungsstrecke hinein zu senden, das nach Durchgang durch mindestens einen Teil der Übertragungsstrecke und Beeinflussung durch mindestens ein Objekt als modifiziertes Sendesignal zumindest zu einem Empfänger gelangt, der Teil des Sensorsystems ist. Das modifizierte Sendesignal wird als modifiziertes Empfangssignal im Empfänger empfangen, der daraus ein Empfängerausgangssignal mit wenigstens einem modifizierten Empfängerausgangssignalanteil bildet. Eine Verarbeitungseinheit des Sensorsystems verarbeitet das Verarbeitungszwischensignal, welches das Empfängerausgangssignal umfasst, weiter und separiert mindestens einen modifizierten Empfängerausgangssignalanteil, aus dem eine Regelwert-Matrix mit wenigstens einem Regelwert-Signal erzeugt wird, wobei mindestens ein Regelwert-Signal von Null verschieden ist.

Aus dem Stand der Technik sind eine ganze Reihe verschiedener Verfahren zum Erkennen eines Objekts in einer optischen Übertragungsstrecke bekannt.

Zu nennen sind hier beispielhaft:

DE102012024597.1

DE102013013664.4

WO2013124018

DE10001955A1

DE10024156A1

DE19839730C1

DE930983U1

DE10001943C1

DE10346741B3

DE102004025345B3

DE102005013325A1

DE102005010745B3

DE102007005187B4

Allen diesen Verfahren ist gemeinsam, dass sie nicht in der Lage sind, mehrere Objekte in einer Übertragungsstrecke ohne Zuhilfenahme verschiedener Zeitschlitze zu erkennen. Derartige Verfahren mit Zeitschlitzen sind jedoch aufwendig.

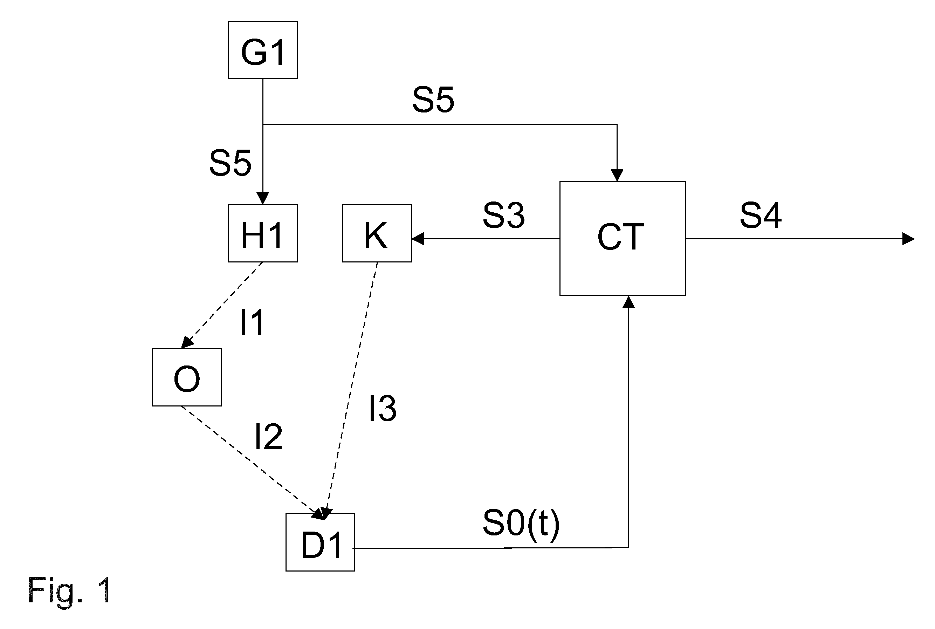

Das Problem wird anhand der Figuren 1 bis 4 erläutert:

Figur 1 zeigt ein nicht beanspruchtes, typisches Sensorsystem, ein sogenanntes Halios-System, wie es aus dem Stand der Technik bekannt ist. Ein Signalgenerator (G1) erzeugt ein Sendesignal (S5) und speist damit einen ersten Sender (H1). Dieser strahlt in eine erste Übertragungsstrecke (I1) ein, die an einem Objekt (O) endet.

Dort wird das Signal, welches das Objekt (O) durch die Übertragungsstrecke (I1) erreicht hat, in eine zweite Übertragungsstrecke (I2) hinein transmittiert oder reflektiert. Nach Durchgang durch diese zweite Übertragungsstrecke (I2) wird das Signal von einem Empfänger (D1) aufgefangen und an einen Regler (CT) als Empfängerausgangssignal (S0(t)) weitergegeben. Dieser erzeugt aus dem Sendesignal (S5) und dem Empfängerausgangssignal (S0(t)) das Kompensatorspeisesignal (S3). Mit diesem Kompensatorspeisesignal (S3) wird ein Kompensationssender (K) gespeist, der ebenfalls (über eine dritte Übertragungsstrecke (I3)) in den Empfänger (D1) einstrahlt. Diese Einstrahlung erfolgt typischerweise linear überlagernd zum Signal, das über die Übertragungsstrecke (12) zum Empfänger (D1) gelangt. Der Regler (CT) filtert und verstärkt dabei bestimmte Signalanteile des Empfängerausgangssignals (S0(t)) in der Art, dass die Überlagerung der Signale im Empfänger (D1) im Wesentlichen einen Gleichpegel ergibt. Das Kompensatorspeisesignal (S3) ist im eingeschwungenen Zustand also komplementär kompensierend zu dem nach dem Durchgang durch die beiden Übertragungsstrecken (I1, O, 12) modifizierten Sendesignal (S5). Eine Regelgröße des Reglers (CT), das Ausgangssignal (S4) stellt dabei typischerweise einen Parameter dar, der mit den Transmissions- oder Reflexionseigenschaften des Objekts (O) oder den Übertragungseigenschaften der beiden Übertragungsstrecken (I1) und (12) korrespondiert.

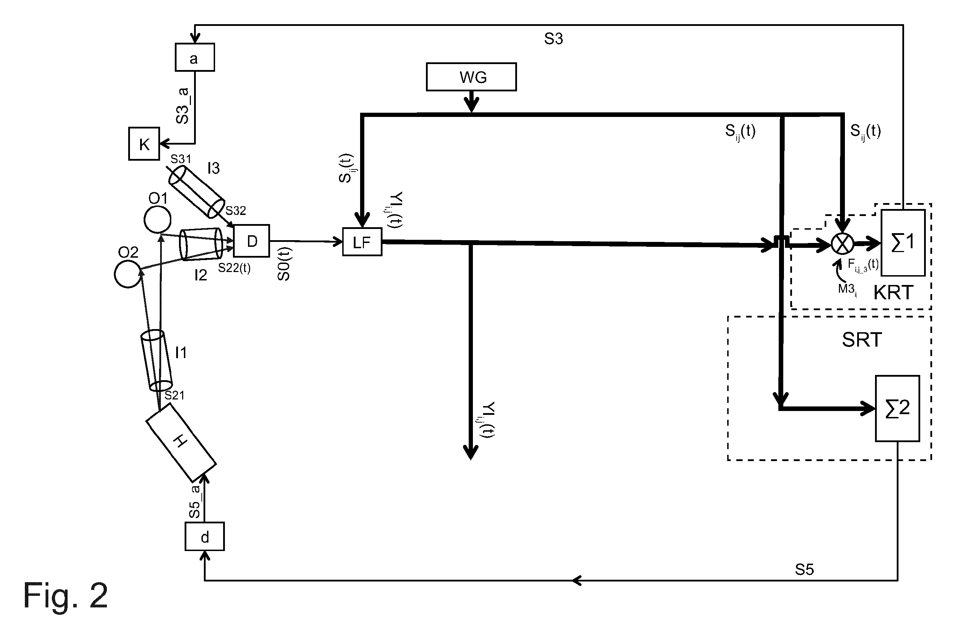

Figur 2 zeigt ein solches System etwas detaillierter: Der Sender (G1) wird durch einen Wavelet-Generator (WG) ersetzt, der nun mehrere Wavelet-Signale $(s_{i,j}(t))$ (oder kurz Wavelets) liefert. Diese Wavelet-Signale $(s_{i,j}(t))$ (Wavelets) werden durch eine erste Vorrichtung, die eine Linearform (LF) bildet, mit dem Empfängerausgangssignal (S0(t)) verknüpft. Es ergibt sich eine Ausgangssignalmatrix $(YI_{i,j})$ der Linearform (LF). Diese ist eine Matrix von Regelwertsignalen $(yi_{i,j}(t))$. Jedes Element, also das Regelwertsignal $(yi_{i,j}(t))$, dieser Ausgangssignalmatrix $(YI_{i,j})$ der Linearform (LF) stellt im Idealfall eines ungestörten Systems mit idealen Komponenten einen Quasigleichpegel dar. In der Realität verhindern Störungen, Rauschen und Regelfehler das erreichen eines perfekten Quasigleichpegels.

Jedes Regelwertsignal $(yi_{i,j}(t))$ dieser Ausgangssignalmatrix $(YI_{i,j})$ der Linearform (LF)wird nun in einer Kompensationsrücktransformationseinheit (KRT) durch jeweils einen Multiplizierer einer dritten Multipliziereinheit $(M3_{ij})$ wieder mit dem korrespondierenden Wavelet-Signal $(s_{i,j}(t))$ des Wavelet-Generators (WG) multipliziert. Es ergibt sich die Roh-Kompensationssignalmatrix $(F_{i,j}\_3)$ mit den zugehörigen Rohkompensationssendesignalen $(F_{i,j}\_3(t))$. Die einzelnen Elemente dieser Roh-Kompensationssignalmatrix $(F_{i,j}\_3)$, die Rohkompensationssendesignale $(F_{i,j}\_3(t))$, werden durch einen Summierer $(\sum 1)$ zum Kompensationssignal (S3) reduziert, genauer, zusammengefasst. Über einen ersten Verstärker (a) wird der Kompensationssender (K) gespeist. Dabei versieht der erste Verstärker das Kompensationssignal (S3) typischerweise mit einem Offset. Der Kompensationssender (K) strahlt wieder in die besagte dritte Übertragungsstrecke (13) das gesendete Kompensationssendersignal (S31) ein. Die dritte Übertragungsstrecke (13) ist vorzugsweise bekannt. Am Ausgang der dritten Übertragungsstrecke (13) befindet sich wieder der Empfänger (D). Dieser empfängt das gesendete Kompensationssendersignal (S31) nach Durchgang durch die dritte Übertragungsstrecke (13) als zweites Übertragungsstreckenausgangssignal (S32).

Das Sendesignal (S5) wird durch summierende Zusammenfassung typischer Weise nur eines Teils der Wavelet-Signale $(s_{i,j}(t))$ durch den zweiten Summierer $(\sum 2)$ gebildet. Dabei kann im Extremfall eines der Wavlet-Signale $(s_{i,j}(t))$ dem Sendesignal (S5) entsprechen. Das Sendesignal (S5) speist wieder, ggf. mit einem Offset versehen, den Sender (H), der in eine erste Übertragungsstrecke (I1) das gesendete Sendersignal (S21) einspeist an deren Ausgang das Signal durch ein oder mehr Objekte (O1, 02) reflektiert oder transmittiert wird. Dabei wird das derartig durch Reflexion oder Transmission modifizierte Signal in eine zweite Übertragungsstrecke (12) eingespeist. Am Ausgang der zweiten Übertragungsstrecke wird das durch die Objekte (O1, 02) und die Übertragungsstrecken (I1, 12) modifizierte Signal als erstes Übertragungsstreckenausgangssignal (S22) ebenfalls in den Empfänger (D) eingespeist, wo sich die das erste Übertragungsstreckenausgangssignal (S22) und das zweite Übertragungsstreckenausgangssignal (S32) typischerweise summierend oder multiplizierend überlagern.

Im Folgenden schreiben wir zur Vereinfachung die Linearform zweier Signale A und B als LF(A,B). A, B, C seien beliebige Signale. $\alpha$ sei eine reelle Zahl.

Eine Linearform (LF) zweier Signale A(t) und B(t), die durch eine Linearformfunktion LF(A(t), B(t)) beschrieben wird und wie sie die erste Vorrichtung zur Bildung ihrer Ausgangssignale $yi_{ij}(t)$ durchführt, hat bezüglich der Linearformfunktion und eines dritten Signals C(t) und einer komplexen Konstante $\alpha$ folgende Eigenschaften:

$$LF(A(t) + B(t), C(t)) = LF(A(t), C(t)) + LF(B(t), C(t))$$

$$LF(\alpha * A(t), C(t)) = \alpha * LF(A(t), C(t))$$

Zwei Signale A(t) und C(t) werden im Folgenden als orthogonal bezeichnet, wenn LF(A(t), C(t))=0 oder in der Realität LF(A(t), C(t))~0 gilt und A(t) und C(t) von Null verschieden sind.

Solange gilt: LF$(s_{i,j}(t), s_{kl}(t))$=0 für i≠k oder j≠l, solange sind die Wavelet-Signale $(s_{i,j}(t))$ untereinander orthogonal. Daher wird der Regler nur die Anteile des ersten Übertragungsstreckenausgangssignals (S22) ausregeln, die exakt einem vom Null verschiedenen Wavelet-Signal $s_{i,j}(t)$ entsprechen.

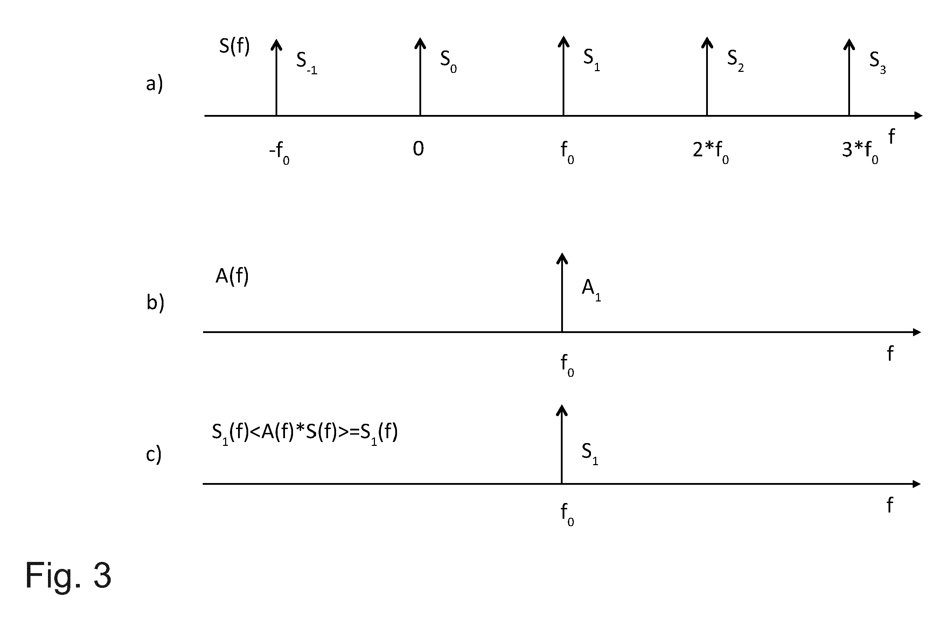

In Figur 3a sind vereinfacht mehrere Signalanteile $S_{-1}$ bis $S_3$ eines Signals S(t) gezeigt, wobei S(t) im Frequenzbereich als Signalbetragsspektrum S(f) dargestellt ist. Diese Signale entsprechen ausdrücklich nicht den Signalen S(-1) bis S3. Die Frequenzen der Signalanteile S-1 bis S3. sollen ganzzahlige Vielfache einer Grundfrequenz $(f_0)$ sein. Wird nun ein Signal S(t), wie in Figur 3a dargestellt, als Empfängerausgangssignal (S0(t)) in das oben beschriebene Halios®-System gemäß Figur 2 eingespeist, so ergibt die Linearform LF(S0(t),$S_1$), die durch die erste Vorrichtung durchgeführt wird, dieses Signals S0(t), das hier ja das Signal S(t) sein soll, und einer Signalkomponente dieses Signals S0(t) bzw. S(t), hier beispielsweise die Komponente $S_1$, als A(f) in Figur 3b bezeichnet, einen Pegel, der nochmals multipliziert mit $S_1$(f) die Signalkomponente $S_1$(f) entsprechend ihrem Anteil in S0(t) reproduziert. Die anderen Frequenzkanäle sprechen nicht an, Figur 3b, 3c.

Ein solches System ist beispielsweise in der EP2631674A1 beschrieben. Das Problem eines solchen Systems ist, dass mehrere Objekte nur begrenzt getrennt werden können. Befinden sich zwei Objekte in einem Zeitschlitz, so ist eine Trennung nicht möglich.

Ursache hierfür ist die in der EP2631674A1 geforderte Orthogonalität der Basissignale, die die Auflösung beschränkt. Dieses Problem taucht auch in Systemen gemäß DE102013013664 und DE102012024597 auf. Dort wird jeweils bereits ein Wavelet-Generator verwendet, ohne das Problem der Notwendigkeit von Zeitschlitzen wirklich zu lösen. Die DE10001943C2 offenbart eine technische Lehre, welche ebenfalls die Unterscheidung verschiedener Objekte mittels der dort offenbarten Messtechnik nicht ermöglicht.

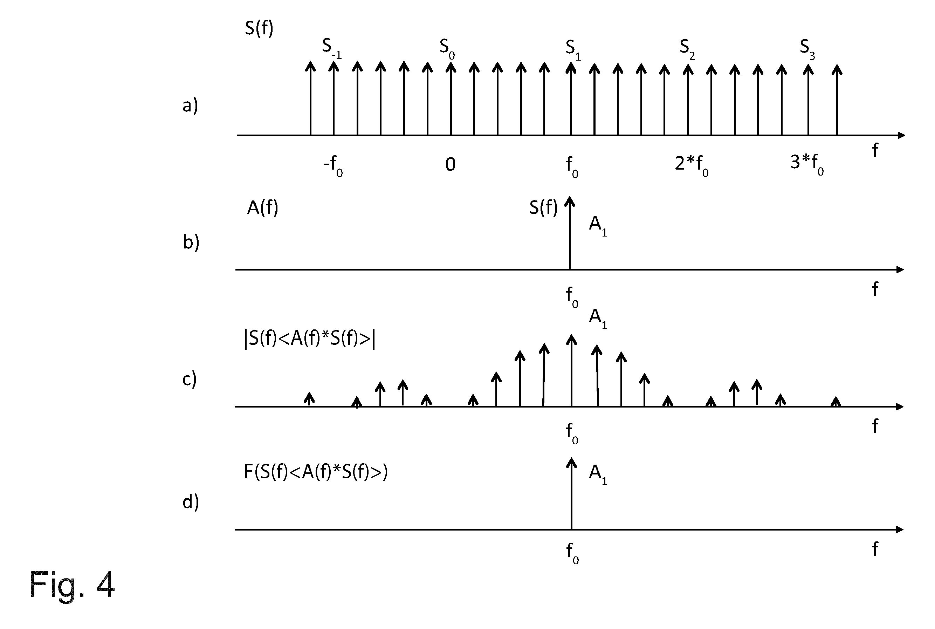

Verzichtet man jedoch auf die Orthogonalität der Wavelet-Signale ($s_{i,j}$(t)) des Wavelet-Generators (WG) zueinander, so sprechen immer mehrere i,j-Kanäle an. Dies ist in Figur 4a dargestellt. Hierbei sind die $S_{-1}$ bis $S_3$ aus Figur 3 nochmals eingezeichnet. Die zwischen den die $S_{-1}$ bis $S_3$ aus Figur 3 liegenden Signalkomponenten des Spektrums sind zusätzliche Wavelet-Signale ($s_{i,j}$(t)), wobei die Signale $S_{-1}$ bis $S_3$ aus Figur 3 ebenfalls zu diesen Wavelet-Signalen ($s_{i,j}$(t)) gehören. Sind die Wavelet-Signale ($s_{i,j}$(t)) dichter zueinander im Frequenzbereich erzeugt (Figur 4a), so sprechen bei Korrelation mit einem einzelnen Signal (Figur 4b) immer einige Seitenkanäle (Figur 4c) mit an. In dem Beispiel ergibt sich eine Empfindlichkeitshüllkurve ähnlich dem Betrag einer si(f)-Funktion. Die Korrelation zu genau einem Wavelet-Signal ($s_{i,j}$(t)) ist bei einem Verlust der Orthogonalität also nicht mehr eindeutig. Dies ist der Kern des zu lösenden Problems.

Es ist somit Aufgabe der vorliegenden Erfindung, die im Stand der Technik bekannten Probleme der Erkennung einzelner Objekte bei Vorhandensein mehrerer Objekte weiter zu verbessern. Es ist somit das eigentliche Ziel der Erfindung, eine Erkennung mehrerer Objekte innerhalb einer optischen Übertragungsstrecke zu ermöglichen, ohne dass die Objekte sich in bestimmten räumlichen Bereichen befinden müssen, um getrennt werden zu können.

Gelöst wird die Aufgabe durch ein Sensorsystem mit den Merkmalen des Anspruchs 1.

Die bekannten Systeme versuchen die obigen Probleme und das Erkennen einzelner Objekte durch eine Orthogonalisierung mittels Zeitschlitzen zu lösen. Gemäß der vorliegenden Erfindung wird - auch bei nicht orthogonalen Wavelet-Signalen ($s_{i,j}$(t)) (Basissignalsatz) - ein Signal, das ein Objekt repräsentiert und das mit einem einzigen der Wavlet-Signale ($s_{i,j}$(t)) korreliert wird, eindeutig wieder gefunden (Figur 4d). Die Erfindung, die nicht mehr an Zeitschlitze gebunden ist, ermöglicht somit eine höhere Auflösung als Systeme im Stand der Technik. Die Erfindung ist also insbesondere im Gegensatz zum Stand der Technik in der Lage, mit nicht-orthogonalen Basis-Signalen, also einer untereinander nicht-orthogonalen Signal-Matrix $S_{i,j}$ des Wavelet-Generators (WG) bestehend aus den Wavelet-Signalen $s_{i,j}$(t) zu arbeiten.

Bei der Erfindung handelt es sich um ein Sensorsystem zur Erkennung mehrerer Objekte in einer Übertragungsstrecke. Diese Übertragungsstrecke besteht typischerweise aus einer ersten Übertragungsstrecke und einer zweiten Übertragungsstrecke. Die Objekte in der Übertragungsstrecke befinden sich typischerweise zwischen der ersten Übertragungsstrecke und der zweiten Übertragungsstrecke. Eine der Übertragungsstrecken kann dabei die Länge Null haben. Auch kann eine der Übertragungsstrecken selbst das Objekt repräsentieren, das vermessen werden soll. Die Übertragungsstrecken befinden sich zwischen dem Sender und einem Empfänger. Die Anordnung aus Figur 2 entspricht also insoweit dem Stand der Technik.

In der folgenden Beschreibung wird zwar vorauseilend an verschiedenen Stellen auf die Figuren zum besseren Verständnis bereits Bezug genommen, diese werden aber in der Figurenbeschreibung nochmals tiefergehend erläutert. Die Beschreibung ist also in ihrer Verallgemeinerung zu verstehen und nicht durch die dargestellten Elemente beschränkt.

Das erfindungsgemäße Sensorsystem umfasst mindestens einen Sender (H), der mit einem Speisesignal (S5) angesteuert wird und daraufhin ein bekanntes Sendesignal (S21) in die erste Übertragungsstrecke (I1) hinein sendet. Nach Durchgang durch mindestens einen Teil der ersten Übertragungsstrecke (I1) und Reflexion an einem Objekt (O) oder Transmission durch ein Objekt (O) gelangt das nun modifizierte Sendesignal über die zweite Übertragungsstrecke (12) als modifiziertes Empfangssignal (S22(t))zu dem Empfänger (DFD). Dabei weist das modifizierte Empfangssignal S22(t) einen modifizierten Empfangssignalanteil (S22e(t)) auf. Dieser modifizierte Empfangssignalanteil (S22e(t)) ist die Signalkomponente des modifizierten Sendesignals (S22(t)), die auf die Wirkungen der Transmission bzw. der Reflektion zurückzuführen ist. Da sie Teil des modifizierten Empfangssignals (S22(t)) ist, ist sie in den Zeichnungen nicht eingezeichnet.

Aus dem Stand der Technik ist bekannt, dass der Empfänger (D) des Sensorsystems das von dem Sender (H) ausgesandte Sendesignal (S21) nach Modifikation durch Übertragungsstrecken (I, I1, 12) und Objekte (O) in den Übertragungsstrecken (I) empfängt. Typischerweise wird das Signal während dieser Übertragung an mindestens einem Objekt (O) reflektiert oder durch dieses Objekt hindurch transmittiert. Das reflektierte oder transmittierte Empfangssignal (S22) enthält dabei den modifizierten Empfangssignalanteil (S22e(t)), der das Echo-Signal repräsentiert. Aus dem Echo-Signal kann auf das Objekt und seine Entfernung oder Position geschlossen werden. Die erfindungsgemäße Vorrichtung kann daher auch diesen Empfangssignalanteil (S22e(t)) separieren.

Das Empfängerausgangssignal (S0(t)), das der Empfänger (D, DFD) ausgibt, enthält daher als Signalkomponente des Empfängerausgangssignals (S0(t)) einen modifizierten Ausgangssignalanteil (S0e(t)) der mit dem besagten modifizierten Empfangssignalanteil (S22e(t)) des Empfangssignals (S22(t)) korrespondiert. Diese Signalkomponente des Empfängerausgangssignals (S0(t)) ist als Signalanteil nicht in den Zeichnungen eingezeichnet. Sie korrespondiert zum modifizierten Empfangssignalanteil S22e(t) des transmittierten oder reflektierten Empfangssignals (S22).

Das erfindungsgemäße Sensorsystem umfasst des Weiteren eine erste Verarbeitungseinheit, die eine Linearform (LF) zweier Signale bildet. Bei diesen beiden Signalen handelt es sich zum ersten um ein Verarbeitungszwischensignal, das das Empfängerausgangssignal (S0) umfasst, oder um ein kompensiertes Empfängerausgangssignal (S1(t)) und zum zweiten um wenigstens ein Wavelet-Signal ($s_{i,j}(t)$) (Basissignal). Die Verarbeitungseinheit kann beispielsweise einen Addierer (A1) oder ein anderes Element umfassen, das eine Addition ausführt. Ist kein addierendes Element vorhanden, kann das Verarbeitungszwischensignal bzw. das kompensierte Empfängerausgangssignal (S1(t)) mit dem Empfängerausgangssignal des Empfängers identisch sein.

Durch die Berechnung der Linearform in der Verarbeitungseinheit (LF) werden die Ausgangssignalanteile separiert. Dabei wird typischerweise für jedes Wavelet-Signal ($s_{i,j}(t)$) durch eine zugehörige Linearform (LF) aus dem Eingangssignal der Verarbeitungseinheit (beispielsweise das Verarbeitungszwischensignal oder das kompensierte Empfängerausgangssignal (S1(t))) ein Signal einer Regelwert-Matrix ($YI_{i,j}$) in Form von entsprechenden Regelwert-Signalen ($yi_{i,j}(t)$) erzeugt. Dies ist natürlich nur sinnvoll, wenn zumindest eines der Regelwert-Signale ($yi_{i,j}(t)$) von Null verschieden ist.

Mindestens eines der Regelwert-Signale ($yi_{i,j}(t)$) oder ein daraus abgeleitetes Signal ($xi_{i,j}(t)$, $zi_{i,j}(t)$, $nf_{i,j}(t)$, $inf_{i,j}(t)$, $S4_{i,j}(t)$, $S6_{i,j\_3}(t)$, $S6_{i,j\_5}(t)$) und/oder ein aus diesen Signalen abgeleitetes Signal ist erfindungsgemäß mindestens ein Maß für eine Eigenschaft oder einen Abstand eines Objekts in der Übertragungsstrecke zum Sensorsystem. Die Signale können jedoch auch ein Maß für die Eigenschaft der Übertragungsstrecke selbst, beispielsweise für die Transmission der Übertragungsstrecke sein. Somit lässt sich mit dem erfindungsgemäßen System nicht nur der Abstand eines Objekts zu dem Sensorsystem ermitteln, sondern beispielsweise auch der Transmissionsgrad eines Materials, beispielsweise einer Flüssigkeit, die die Übertragungsstrecke bildet.

Erfindungsgemäß umfasst die Signalerzeugungseinheit einen Wavelet-Generator, der wenigstens zwei Wavelets als Wavelet-Signale ($s_{i,j}(t)$) erzeugt. Je zwei Wavelets bilden ein Paar. Die beiden Wavelet-Signale ($s_{i,j}(t)$), die ein Paar von Signalen bilden, erfüllen bevorzugt die folgenden Bedingungen:

das eine Wavelet-Signal ($s_{i,j}(t)$) ist aus mindestens einem ersten Ur-Wavelet-Signal ($s_{1,1}(t)$) gebildet,

das andere Wavelet-Signal ($s_{i,j}(t)$) ist aus mindestens einem zweiten Ur-Wavelet ($s_{1,1}(t)'$) gebildet,

die Integration der beiden Ur-Wavelet-Signale ($s_{1,1}(t)$) und ($s_{1,1}(t)'$) über eine Ur-Wavelet-Periode (P) ist jeweils gleich Null für jedes der Ur-Wavelet-Signale ($s_{1,1}(t)$, $s_{1,1}(t)'$),

die Ur-Wavelet-Signale ($s_{1,1}(t)$, $s_{1,1}(t)'$) mit einer Periodendauer T sind bezüglich eines Symmetriepunktes T/2 symmetrisch, wobei gilt:

$$s_{1,1}(t-T/2) = (-1) * s_{1,1}(-t-T/2) \text{ und } s_{1,1}'(t-T/2) = (-1) * s_{1,1}'(-t-T/2),$$

und

für die beiden Ur-Wavelets ($s_{1,1}$, $s_{1,1}'$): $s_{1,1}(t) = s_{1,1}'(t+T/4)$, für $0 <= t <= T/2$

Der Fachmann erkennt, dass ein Paar kontinuierlicher Wellenzüge von zwei Signalen bestehend aus einer kontinuierlichen Aufeinanderfolge dieser Wavelet-Signale ($s_{1,1}(t)$, $s_{1,1}(t)'$), das diese bevorzugten Bedingungen erfüllt, 90 Grad phasenverschoben ist. Genauere Erläuterungen zu den Ur-Wavelets, der Ur-Wavelet-Periode (P) und der Periodendauer (T) sind an späterer Stelle im Text offenbart.

Damit ein Wavelet-Signal ($s_{1,1}(t)$, $s_{1,1}(t)'$), dass die obige Integrationsbedingung erfüllt, zur Speisung eines Senders oder eines Kompensationssenders, insbesondere zur Speisung eines optischen Senders, beispielsweise einer LED verwendet werden kann, ist ein Offset notwendig, damit keine negativen Signalanteile entstehen. Derartige Signalanteile lassen sich nicht (optisch) senden, da es kein "negatives Licht" gibt. Dieser Aspekt ist dem Fachmann jedoch geläufig, so dass er geeignete Maßnahmen ergreifen wird. Beispielsweise können zu den obigen Signalen ein Gleichanteil oder ein konstantes Gleichsignal addiert werden.

Besonders bevorzugt besteht das obige Paar also aus einem Signal und einem um 90 Grad phasenverschobenen Signal. Bevorzugt sind sowohl das Signal wie auch das phasenverschobene Signal monofrequente Signale. Besonders bevorzugt kann es sich bei dem Signal beispielsweise um ein Sinussignal und bei dem um 90 Grad phasenverschobenen Signal um ein dazu orthogonales Cosinussignal handeln.

Das erfindungsgemäße Sensorsystem zeichnet sich dadurch aus, dass der Empfänger (D) eine Avalanche-Diode (AVD) ist, deren Empfängerausgangsignal (s0(t)) durch Modulation der Sperrspannung der Diode mit einer vorbestimmten Modulationsfrequenz auf eine vordefinierte Zwischenfrequenz gewandelt wird. Dies hat den Vorteil, dass das Empfangssignal direkt in der Avalanche-Photodiode verstärkt und demoduliert werden kann. Hierdurch entsteht ein geringes Rauschen. Gleichzeitig bietet die Avalanche-Diode (AVD) eine große Bandbreite.

Es ist auch denkbar, ein Feld mit mehreren integrierten Avalanche-Photodioden zu bilden. In diesem Fall können die sogenannten Quadraturkomponenten unterschiedliche Frequenzen parallel verarbeiten. Hierdurch erfolgt eine schnellere Verarbeitung und eine kürzere Reaktionszeit des Systems.

Erfindungsgemäß kann das System alternativ zu der Avalanche-Diode auch einen Empfänger aufweisen, der eine Drift-Field-Diode (DFD) ist. In der Drift-Field-Diode ist wenigstens ein Element der Verarbeitungseinheit integriert, vorzugsweise die Linearform (LF) der Verarbeitungseinheit oder ein Teil derselben. Mit einer Drift-Field-Diode oder einem Drift-Field-Demodulation-Pixel lässt sich das Empfangssignal im Pixel kumulieren und demodulieren. Die Demodulation kann dann bevorzugt mit Rechtecksignalen erfolgen. Mit einer Drift-Field-Diode ist es möglich, direkt in der Diode die Demodulation durchzuführen. Mit vier schnellen Abtastungen pro Periode kann beispielsweise bevorzugt die Amplitude und Phase des Empfangssignals bestimmt werden.

In einer bevorzugten Ausführungsform wird eine Drift-Field-Diode (DFD) in Form einer Lateral-Drift-Field-Diode verwendet. Sie bietet eine schnelle Auslesemöglichkeit, die durch laterale elektrische Felder ermöglicht wird. Die maximale theoretische Demodulationsfrequenz liegt hierbei im Gigahertzbereich. Somit bietet auch die Drift-Field-Diode den Vorteil, dass eine sehr schnelle und effiziente Verarbeitung durchgeführt werden kann. In einer bevorzugten Ausführungsform des Sensorsystems mit Drift-Field-Diode umfasst sie eine Multiplikationseinheit als Teil der Linearform der Verarbeitungseinheit, so dass das Empfangssignal direkt in der Drift-Field-Diode mit beispielsweise dem Wavelet-Signal multipliziert werden kann.

Bei einer bevorzugten Ausbildung des Sensorsystems mit Avalanche-Diode (AVD) wird die Zwischenfrequenz auf Basis des Speisesignals bestehend aus Wavelet-Signalen und der Modulationsfrequenz des Speisesignals ermittelt. Die von dem Wavelet-Generator (WG) der Signalerzeugungseinheit generierten Wavelet-Signale ($s_{i,j}(t)$) sind bevorzugt auf die Zwischenfrequenz der Avalanche-Diode abgestimmt.

In einer weiter bevorzugten Ausführungsform schließt das Sensorsystem einen Schätzer zur Selektion wenigstens eines der Regelwert-Signale ($yi_{i,j}(t)$) und zur Ermittlung eines Echo-Signals eines Objekts (O) in der Übertragungsstrecke (I1, 12) ein. Der Schätzer ist bevorzugt in der Lage, die Entfernung eines Objekts (O) zu dem Sensorsystem zu bestimmen und/oder Reflexionseigenschaften eines Objektes (O). Darüber hinaus kann mittels des Schätzers bevorzugt auch die Transmissionseigenschaft der Übertragungsstrecke (I1, 12) selbst ermittelt werden.

In einer weiter bevorzugten Ausführungsform arbeitet das Sensorsystem nach dem Frequenzbereichs-Verfahren. Bevorzugt werden mittels der Linearform (LF), die in der Drift-Field-Diode (DFD) bevorzugt integriert ist, Fourier-Koeffizienten gebildet. In einer bevorzugten Ausführungsform erfolgt dies durch Multiplikation des Verarbeitungszwischensignals mit den jeweiligen Wavelet-Signalen ($s_{i,j}(t)$) und einer anschließenden Integration.

In einer besonders bevorzugten Ausführungsform wird das Verarbeitungszwischensignal mit den jeweiligen Cosinus- und Sinusfunktionen multipliziert. In dem Schätzer erfolgt ebenfalls bevorzugt eine Quotientenbildung von Referenz-Fourier-Koeffizienten, die mittels eines Referenzsenders und der Linearform erzeugt wurden, und aktuell ermittelten Fourier-Koeffizienten der Messung. Das durch Quotientenbildung gebildete Signal ist ein Echo-Informationssignal im Frequenzbereich. Mittels einer inversen Fourier-Transformation, die in einer IFFT-Einheit ausgeführt wird, wird bevorzugt ein Echo-Signal (Echo-Zeitsignal) gebildet, aus dem die gewünschten Informationen über das Objekt und die Übertragungsstrecke, wie oben dargestellt, bestimmt werden können.

In einer bevorzugten Ausführungsform umfasst das Sensorsystem einen Filter, der zumindest einen Teil der Regelwert-Signale zu Filterausgangssignalen umwandelt, wobei der Filter bevorzugt durch den Schätzer gesteuert wird, falls ein Schätzer vorhanden ist. In einer ebenfalls bevorzugten Ausführungsform ist der Filter als nicht-linearer Filter ausgebildet und wird dann gegebenenfalls durch den Schätzer gesteuert.

Wenn das Sensorsystem bevorzugt einen Schätzer aufweist, wird genau das Empfangssignal empfangen und gemessen, das das Objekt repräsentiert, obwohl aufgrund der fehlenden Orthogonalität in dem Empfangssignal auch Seitenbänder auftreten. Der Schätzer ermittelt genau das Signal, das ein Objekt (O) repräsentiert und das mit einem einzigen der Wavelet-Signale ($s_{i,j}(t)$) korreliert wird. Er ist also in der Lage das entsprechende Signal eindeutig wiederzufinden.

Darüber hinaus kann aus dem ermittelten Echo-Signal neben der Bestimmung der Entfernung eines Objekts (O) zu dem Sensorsystem auch die Reflexionseigenschaft eines Objekts (O) in der Übertragungsstecke und/oder die Transmissionseigenschaften der Übertragungsstrecke (I1, 12) selbst bestimmt werden. Auf diese Weise lassen sich beispielsweise auch Eigenschaften eines Materials oder eines Stoffes in der Übertragungsstrecke (I1, 12) bestimmen.

Somit sind letztlich mindestens eines der Regelwert-Signale ($yi_{i,j}(t)$) oder ein daraus abgeleitetes Signal ($xi_{i,j}(t)$, $zi_{i,j}(t)$, $nf_{i,j}(t)$, $inf_{i,j}(t)$, $S4_{i,j}(t)$), $S6_{i,j\_3}(t)$, $S6_{i,j\_5}(t)$) und/oder ein aus diesen Signalen abgeleitetes Signal ein Maß für die Eigenschaft oder den Abstand des Objekts zu dem Sensorsystem oder ein Maß für die Eigenschaft der Übertragungsstrecke selbst.

Bevorzugt ist der Schätzer als Maximum-Schätzer ausgebildet. In diesem Fall sucht der Schätzer den Maximalwert der Regelwert-Signale ($yi_{i,j}(t)$), der anderen Signale ($xi_{i,j}(t)$, $zi_{i,j}(t)$, $nf_{i,j}(t)$, $inf_{i,j}(t)$, $S4_{i,j}(t)$, $S6_{i,j\_3}(t)$, $S6_{i,j\_5}(t)$) und/oder eines aus diesen Signalen abgeleiteten Signals. Aus diesen Signalen oder auch nur einem dieser Signale kann dann ein Rückschluss auf das Objekt (O) und auf die Entfernung des Objekts (O) zu dem Sensorsystem gezogen werden.

Durch Anwendung eines Schätzers ist es daneben auch möglich, mehrere Objekte (O1, 02) zu unterscheiden und die Objekte (O1, 02) und ihre Entfernungen zu dem System zu ermitteln. Daneben können bevorzugt auch weitere Objekte erkannt werden, deren Entfernung zum Sensorsystem jedoch nicht ermittelt wird. Hierzu wird bevorzugt das Echo-Informationssignal (EInf) verwendet, das ausgegeben und/oder weiterverarbeitet werden kann.

In einer bevorzugten Ausführungsform umfasst das Sensorsystem einen Referenzspeicher (MRef), in dem Regelwert-Signale einer Referenzmessung gespeichert werden. Bevorzugt wird der Schätzer von einem der Regelwert-Signale aus dem Referenzspeicher (MRef) gespeist. Dieses Referenz-Regelwert-Signal kann dann zu dem aktuellen Regelwert-Signal in dem Schätzer in Beziehung gesetzt werden, beispielsweise durch Quotientenbildung oder durch Subtraktion.

Daneben können bevorzugt nicht nur die Regelwert-Signale ($yi_{i,j}(t)$), sondern auch auf diesen Regelwert-Signalen basierende weiterverarbeitete Signale ($xi_{i,j}(t)$, $zi_{i,j}(t)$, $nf_{i,j}(t)$, $inf_{i,j}(t)$, $S4_{i,j}(t)$, $S6_{i,j\_3}(t)$, $S6_{i,j\_5}(t)$) und/oder aus diesen Signalen abgeleitete Signale in dem Schätzer verarbeitet werden. Bevorzugt sind die weiterverarbeiteten Signale Ausgangssignale eines im Signalpfad hinter der Verarbeitungseinheit angeordneten Filters oder Integrators. Optional können die weiterverarbeiteten Signale auch für jedenfalls einen Zeitpunkt zwischengespeichert werden, beispielsweise in einem ersten oder zweiten Speicher.

In einer bevorzugten Ausführungsform erzeugt der Wavelet-Generator (WG) wenigstens zwei Wavelet-Signale als Basissignale. Je zwei Wavelet-Signale bilden, wie oben erläutert, ein Paar, das beispielsweise aus einer Sinusfunktion und einer dazu orthogonalen Cosinusfunktion bestehen kann. In der Verarbeitungseinheit werden bevorzugt Fourier-Koeffizienten gebildet. Dies erfolgt mittels der Linearform (LF) der ersten Verarbeitungseinheit, die bevorzugt eine Multiplikation des Bearbeitungszwischensignals mit der jeweiligen Cosinus-oder Sinusfunktion und anschließender Integration ausgeführt wird. In dem Schätzer findet vorzugsweise eine Quotientenbildung von Referenz-Fourier-Koeffizienten und aktuell ermittelten Fourier-Koeffizienten statt. Die Referenz-Fourier-Koeffizienten können dabei in einem Referenzspeicher (MRef) zwischengespeichert werden. Sie sind in einer Referenzmessung vor der eigentlichen Messung mittels eines Referenzsenders (R) und der Verarbeitungseinheit erzeugt worden. Der Referenzsender (R) wird in der Referenzmessung mit einem bekannten Basissignal gespeist, vorzugsweise einem Wavelet-Signal ($s_{i,j}(t)$), das bevorzugt über eine bekannte Übertragungsstrecke direkt zu dem Empfänger gelangt.

In dieser bevorzugten Ausführungsform wird das Echo-Signal in einer IFFT-Einheit mittels einer inversen Fourier-Transformation aus dem Ausgangssignal des Schätzers gebildet. Optional kann die IFFT-Einheit in dem Schätzer integriert sein. Diese Ausführungsform zeigt also ein Beispiel des erfindungsgemäßen Sensorsystems bei einer Verarbeitung im Frequenzbereich.

In einer bevorzugten Ausführungsform verfügt das erfindungsgemäße Sensorsystem zusätzlich über einen Filter, bevorzugt über einen nicht-linearen Filter (NLF). Dieser nicht-lineare Filter (NLF) wandelt typischer Weise alle oder zumindest einen Teil dieser Regelwert-Signale ($yi_{i,j}(t)$) (oder andere aus diesen Regelwert-Signalen abgeleitete andere mögliche Eingangssignale ($y_{i,j}(tn)$, $x_{i,j}(t)$, $z_{i,j}(t)$) (NLF-Eingangssignale) des (nicht-linearen) Filters (NLF), die später erläutert werden) zu Ausgangssignalen ($nf_{i,j}(t)$) des Filters, bevorzugt eines nicht-linearen Filters (NLF-Ausgangssignale), um. Dabei selektiert er bevorzugt durch einen nicht-linearen Prozess einige wenige der Regelwert-Signale ($yi_{i,j}(t)$). Alternativ können auch andere aus diesen Regelwert-Signalen abgeleitete Eingangssignale des nicht-linearen Filters (NLF-Eingangssignale), wie beispielsweise $y_{i,j}(tn)$, $x_{i,j}(t)$, $z_{i,j}(t)$, die später erläutert werden, selektiert werden. Natürlich muss das Sensorsystem mindestens eine Einheit (z.B. einen Wavelet-Generator (WG)) umfassen, die zumindest ein Speisesignal (S5) zur Speisung des Senders (H) erzeugt. Ebenso muss das Sensorsystem mindestens eine Einheit umfassen, die ein Kompensatorspeisesignal (S3) zur Speisung eines Kompensators bzw. Kompensationssenders (K) erzeugt.

Es bestehen dabei grundsätzlich zwei Möglichkeiten für die Regelung der Sensorsystemstabilität. Zum Einen kann das Sendesignal (S5) geregelt werden und zum Anderen das Kompensatorspeisesignal (S3). Eine Kombination von beiden Verfahren nach einem Regelalgorithmus ist natürlich immer möglich.

Das erfindungsgemäße Sensorsystem weist eine Rücktransformations-Einheit auf, die aus zumindest einem Teil der Regelwert-Signale ($yi_{i,j}(t)$) eine Senderücktransformation (SRT) durchführt und das Speisesignal (S5) erzeugt.

Zusätzlich oder alternativ führt die Rücktransformations-Einheit aus wenigstens einem Teil der Regelwertsignale eine Kompensationsrücktransformation (KRT) durch und erzeugt das Kompensationssignal (S3). Hierbei erfolgt die Rückführung des Kompensationssignals in das Sensorsystem hinein, so dass am Eingang der ersten Verarbeitungseinheit, die eine Linearform (LF) umfasst, ein kompensiertes Empfängerausgangssignal (Verarbeitungszwischensignal) anliegt. Auf die erste Verarbeitungseinheit mit der Linearform (LF) wird noch eingegangen.

Somit umfasst bevorzugt das Sensorsystem eine Einheit, die eine Senderücktransformation (SRT) durchführt, die aus zumindest einem Teil der Regelwertsignale $(yi_{i,j}(t)$ oder der Schätzer-Eingangssignale oder aus diesen abgeleiteten Signalen $(nf_{i,j}(t), inf_{i,j}(t), S4_{i,j}(t))$, die später erläutert werden, das Speisesignal (S5) erzeugt und/oder eine Einheit, die eine Kompensationsrücktransformation (KRT) durchführt, die aus zumindest einem Teil der Schätzer-Eingangssignale oder aus diesen abgeleiteten Signalen $(nf_{i,j}(t), inf_{i,j}(t), S4_{i,j}(t))$, die später erläutert werden, ein Kompensatorspeisesignal (S3) erzeugt.

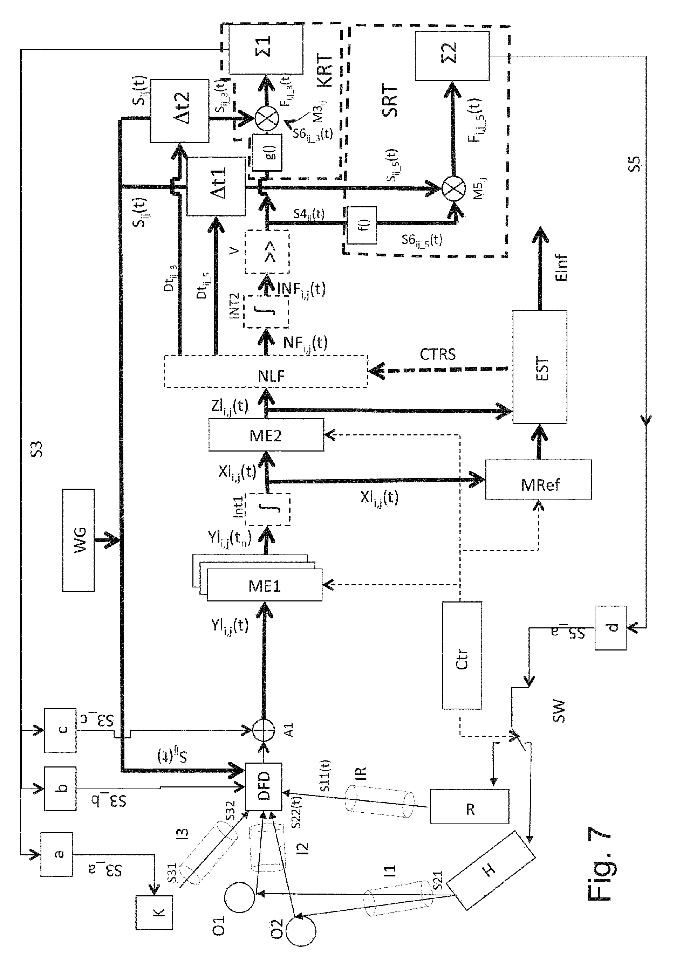

Wie bei anderen Halios®-System ist eine Rückführung des Kompensatorspeisesignals (S3) Teil des Systems. Für diese Rückführung bestehen grundsätzlich drei Möglichkeiten. Die Möglichkeiten sind alle beispielhaft in Figur 7 gezeigt. Dabei wird ausdrücklich daraufhin gewiesen, dass jede der Kompensationsmöglichkeiten einzeln oder in einer beliebigen (hier nicht dargestellten) Kombination auftreten kann. Im Einzelnen sind die drei Möglichkeiten:

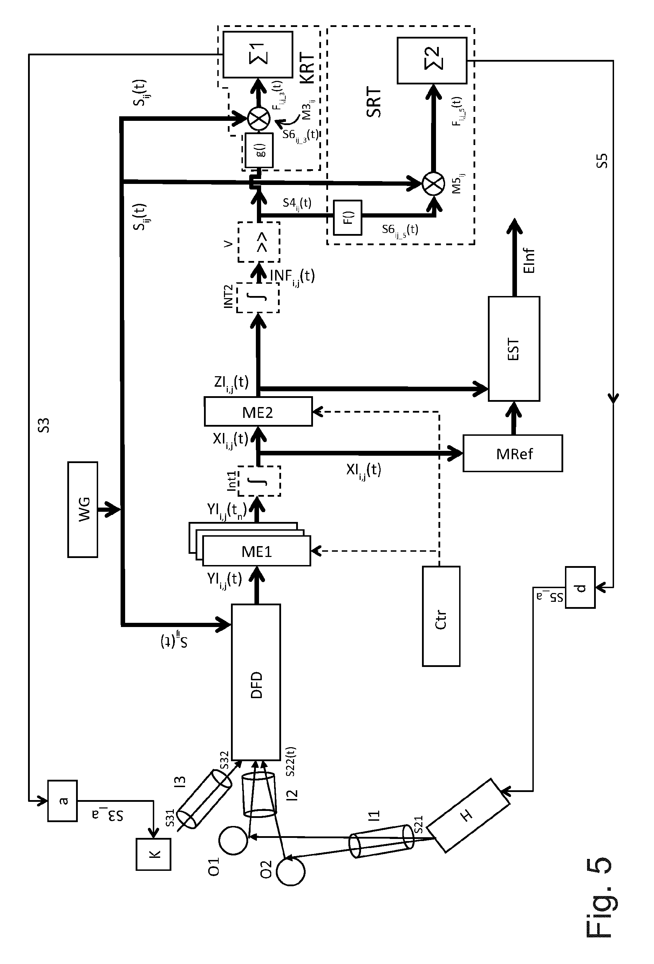

Zum Ersten kann die Rückführung des Kompensatorspeisesignals (S3) als erstes Kompensatorsignal (S3_a) (siehe z.B. Figur 5) verstärkt und/oder gefiltert mit einer ersten Kompensationsfilterfunktion a(S3) über einen Kompensationssender (K) und eine dritte Übertragungsstrecke (13), wie bereits beschrieben, summierend überlagernd oder multiplizierend überlagernd im Empfänger (D) erfolgen, der eine Drift-Field-Diode (DFD) sein kann. Typischerweise erfolgt diese Überlagerung im Empfänger (D, DFD) summierend, wenn dieser linear arbeitet. Sofern dieser eine nicht-lineare Empfindlichkeitskennlinie besitzt, können beispielsweise höhere Terme einer Taylor-Entwicklung ausgenutzt werden, um die Multiplikation zu realisieren. Die nachfolgende (integrierte) Linearform (LF) wird dann beispielsweise nicht mit einem Wavelet-Signal $(s_{i,j}(t))$ sondern mit einem quadrierten Wavelet Signal $(s_{i,j}(t)^2)$ durchgeführt. Zum Zweiten kann die Rückführung des Kompensatorspeisesignals (S3) als zweites Kompensatorsignal (S3_b) (siehe z.B. Figur 7) verstärkt und/oder gefiltert mit einer zweiten Kompensationsfilterfunktion b(S3) summierend überlagernd oder multiplizierend überlagernd direkt in den Empfänger (D) oder die Drift-Field-Diode (DFD) hinein erfolgen.

Zum Dritten kann die Rückführung des Kompensatorspeisesignals (S3) als drittes Kompensatorsignal (S3_c) (siehe z.B. Figur 7) verstärkt und/oder gefiltert mit einer dritten Kompensationsfilterfunktion c(S3) summierend in einem Addierer (A1) mit dem Empfängerausgangssignal S0(t) zum kompensierten Empfängerausgangssignal S1(t) erfolgen.

Wie bei allen Halios®-System werden dabei die Vorzeichen und Verstärkungen und Übertragungsfunktionen aller Elemente so gewählt, dass sich im Regelkreis des Sensorsystems Stabilität ergibt. Hierunter versteht der Fachmann, dass das System so geregelt wird, dass am Ausgang des Empfänger im Wesentlichen (bis auf einen Regelfehler oder das Systemrauschen) ein Gleichsignal anliegt, bevorzugt ein Nullsignal. Typischerweise ist dann mindestens ein Regelwertsignal $(yi_{i,j}(t))$ der Regelwert-Matrix $(YI_{i,j}(t))$ eine charakteristische Größe für wenigstens einen von n x m möglichen Ausgangssignalanteilen.

Ein weiteres Charakteristikum des erfindungsgemäßen Sensorsystems ist, dass das Sensorsystem über einen Wavelet-Generator (WG) verfügt, der bevorzugt Wavelets in der beispielhaften Definition des Buches von Stéphane Mallat, "A Wavelet Tour of Signal Processing" Academic Press London 1997 erzeugt.

Danach erzeugt beispielsweise der Wavelet-Generator (WG) bevorzugt aus mindestens einem Ur-Wavelet-Signal $(s_{1,1}(t))$ das Basissignal, das periodisch mit einer Ur-Wavelet-Periode (P) ist, wobei eine Ur-Wavelet-Periode (P) die Länge unendlich haben kann.

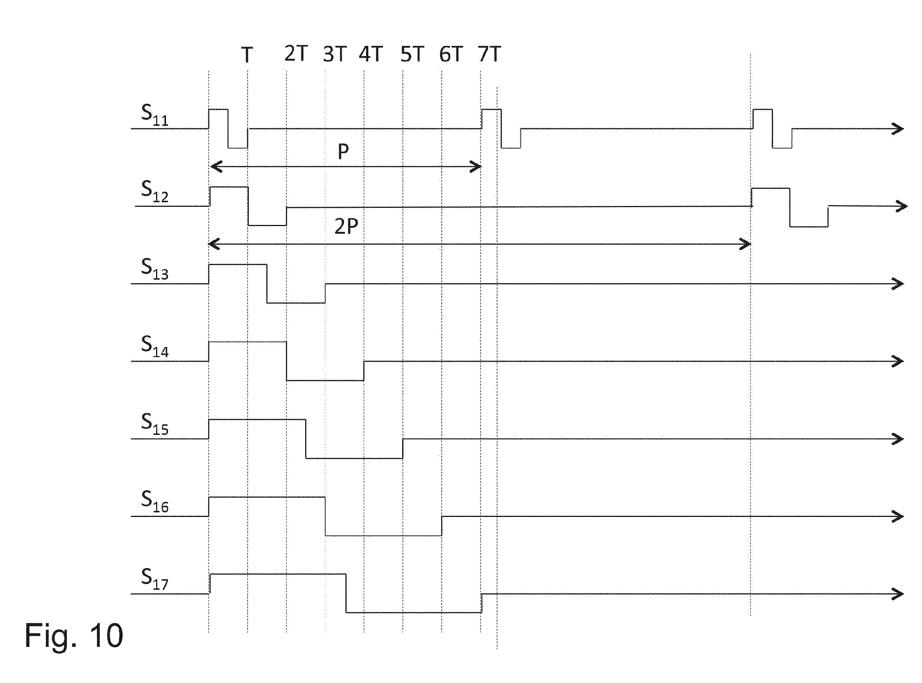

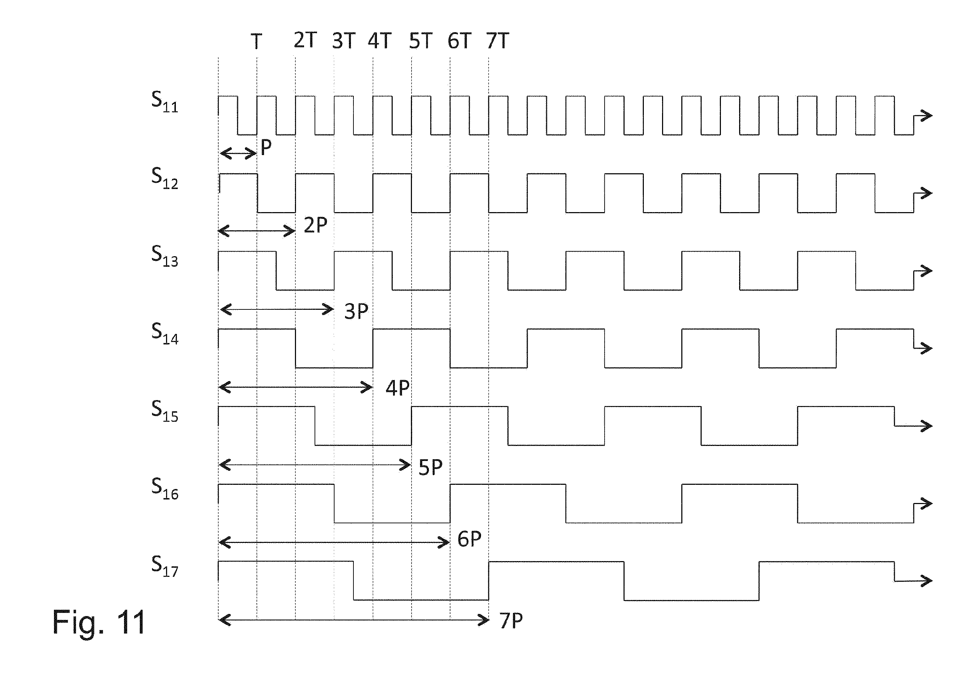

Bei mehreren Wavelet-Generatoren, beispielsweise zwei Wavelet-Generatoren, erzeugen diese aus mindestens einem - möglicherweise Wavelet-Generator spezifischen - Ur-Wavelet-Signal $(s_{1,1\_a}(t)\ s_{1,1\_b}(t))$ (siehe z.B. Figur 10) ein jeweiliges Basissignal, das periodisch mit einer (möglicherweise spezifischen) Ur-Wavelet-Periode (Pa, Pb) ist, wobei auch hier eine oder mehrere dieser Ur-Wavelet-Perioden (Pa, Pb) die Länge unendlich haben können. Die Wavelets sind hierdurch zueinander zeitlich um den Abstand der Periode P bzw. Pa und Pb beabstandet, wie in Figur 11 gezeigt.

Neben diesem Abstand weisen aber die Wavelets auch noch eine zeitliche Länge T bzw. Ta, Tb auf (siehe Figur 11). Typischer Weise wird daher das Sensorsystem mit einer Systemperiode der Periodenlänge (T, Ta, Tb) oder einer gemeinsamen Systemperiodendauer, die ein kleinstes gemeinsames Vielfaches dieser Periodenlängen ist, betrieben. Die Periodenlänge (T, Ta, Tb) braucht dabei nicht für jede Periode gleich sein. Auch kann die Periodenlänge (T, Ta, Tb) einen beliebigen Wert haben, der den Wert unendlich einschließt und von der Periodenlänge 0 verschieden ist. Bevorzugt erzeugt der Wavelet-Generator (WG) n x m aus dem Ur-Wavelet generierte periodische Tochter-Wavelet-Signale $(s_{i,j}(t), s_{i,j\_a}(t)\ s_{i,j\_b}(t)$ mit 1<i<n, 1<j<m) oder zumindest eine Teilmenge dieser Tochter-Wavelet-Signale $(s_{i,j}(t), s_{i,j\_a}(t), s_{i,j\_b}(t)$ mit 1<i<n, 1<j<m), die beispielsweise gegenüber dem jeweiligen Ur-Wavelet-Signal $(s_{1,1}(t), s_{1,1\_a}(t)\ s_{1,1\_b}(t))$ zeitlich um einen Faktor gestaucht oder gestreckt sind. Dieser Faktor kann beispielsweise der Faktor 1/j oder j, aber auch 1 oder eine reelle Zahl sein. Gleichzeitig können die Tochter-Wavelet-Signale um einen zweiten Faktor gegenüber dem korrespondierenden Wavelet-Signal $(s_{1,j}(t)$ bzw. $s_{1,j\_a}(t)$ bzw. $s_{1,j\_b}(t))$ verzögert sein. Dieser zweite Faktor kann unter anderem beispielsweise der Faktor (n-1)*T/j bzw. (n-1)*Ta/j bzw. (n-1)*Tb/j oder (n-1)*T*j bzw. (n-1)*Ta*j bzw. (n-1)*Tb*j sein. Ein alternativer zweiter Faktor wäre beispielsweise der Faktor (n-1)*T bzw. (n-1)*Ta bzw. (n-1)*Tb.

Die Tochter-Wavelet-Periode kann bevorzugt ebenfalls angepasst werden. Eine typische Tochter-Wavelet-Periode hat beispielsweise eine Periodenlänge von P/j bzw. von Pa/j bzw. von Pb/j oder P*j bzw. Pa*j bzw. bzw. Pb*j. Hinsichtlich der Theorie der Wavelets sei hier, wie auch anderer Stelle, auf die einschlägige Literatur, beispielsweise Stéphane Mallat, "A Wavelet Tour of Signal Processing" Academic Press London 1997 verwiesen. Dies sind also nur Beispiele der vielfältigen möglich Wavelets, die hier denkbar sind.

Ein wesentliches Element des Sensorsystems ist die erste Verarbeitungseinheit, die die notwendige Linearform (LF) erzeugt. Mit Hilfe der jeweils stets gleichartigen Linearform (LF) wird durch die erste Verarbeitungseinheit das Verarbeitungszwischensignal, welches das Empfängerausgangssignal oder das kompensierte Empfängerausgangssignal umfasst, mit jeweils einem der Wavelet-Signale ($s_{i,j}$(t) $s_{i,j\_a}$(t)) verknüpft (Verknüpfung). Das Ergebnis dieser n x m Verknüpfungen ist eine Regelwert-Matrix ($YI_{i,j}$) in Form der ersten Regelwert-Signale ($yi_{1\_i,j}$(t)). In den Zeichnungen ist als Ausgang der Linearform stets nur das Regelwert-Signal ($yi_{i,j}$(t)) als erste Regelwertmatrix ($YI_{1\_i,j}$(t)) eingezeichnet. Dieses repräsentiert eine oder mehrere der hier und im Folgenden erläuterten möglichen Regelwert-Signale ($yi_{1\_i,j}$(t) bis $yi_{6-i,j}$(t).

Eine bevorzugte alternative Form der Verknüpfung, die ebenfalls eine Linearform ist, ist eine einfache Multiplikation. Die Verarbeitungseinheit verknüpft mit Hilfe einer Multiplikation das Verarbeitungszwischensignal mit jeweils einem der Wavelet-Signale ($s_{i,j}$(t)). Das Ergebnis dieser n x m Verknüpfungen ist wieder eine zweite Regelwert-Matrix ($YI_{2\_i,j}$) in Form der zweiten Regelwert-Signale ($yi_{2\_i,j}$(t)).

Eine bevorzugte Erweiterung dieser Methode ist die Bildung der Linearform mit Hilfe jeweils einer Multiplikation gefolgt von einer Filterung oder Integration. Dabei wird zunächst das Verarbeitungszwischensignal mit jeweils einem der besagten Wavelet-Signale ($s_{i,j}$(t)) multipliziert und anschließend mittels eines Filters, insbesondere eines Tiefpasses, gefiltert oder mittels eines Integrators integriert. Dabei ist das Ergebnis dieser n x m Verknüpfungen wieder eine dritte Regelwert-Matrix ($YI_{3\_i,j}$) in Form der dritten Regelwert-Signale ($yi_{3-i,j}$(t)).

Genaugenommen ist die zuvor beschriebene Form nichts anderes als ein Skalar-Produkt. Somit kann auch mit Hilfe jeweils eines stets gleichartigen Skalar-Produkts das Verarbeitungszwischensignal (Empfängerausgangssignal oder das kompensierte Empfängerausgangssignal) mit jeweils einem der Wavelet-Signale ($s_{i,j}$(t)) verknüpft werden. In diesem Falle ist das Ergebnis dieser n x m Verknüpfungen eine vierte Regelwert-Matrix ($YI_{4\_i,j}$) in Form der vierten Regelwert-Signale ($yi_{4\_i,j}$(t)).

Als vorletztes sei an dieser Stelle nochmals erwähnt, dass bevorzugt jeweils ein stets gleichartiger Korrelationsfilter das Verarbeitungszwischensignal wiederum mit jeweils einem der Wavelet-Signale ($s_{i,j}$(t)) verknüpfen kann. Das Ergebnis dieser n x m Verknüpfungen ist in diesem Falle eine fünfte Regelwert-Matrix ($YI_{5-i,j}$) in Form der fünften Regelwert-Signale ($yi_{5-i,j}$(t)).

Als letztes sei an dieser Stelle nochmals erwähnt, dass bevorzugt jeweils ein stets gleichartiger Matched-Filter das Verarbeitungszwischensignal (Empfängerausgangssignal oder das kompensierte Empfängerausgangssignal) mit jeweils einem der Wavelet-Signale ($s_{i,j}$(t)) verknüpfen kann. Hierbei müssen die Wavelet-Signale ($s_{i,j}$(t)) allerdings vordefiniert sein. Der Matched-Filter ist also jeweils so konstruiert, dass er nur das jeweilige Wavelet-Signal ($s_{i,j}$(t)) (oder dessen Zusammenstellungen) durchlässt und die anderen Wavelet-Signale (oder Zusammenstellungen) derselben sperrt. Das Ergebnis dieser n x m Verknüpfungen ist in diesem Falle eine sechste Regelwert-Matrix ($YI_{6-i,j}$) in Form der sechsten Regelwert-Signale ($yi_{6\_i,j}$(t)).

Wie oben bereits mehrfach ausgeführt, ist es in der Praxis typischer Weise nicht notwendig, dass alle möglichen n x m Verknüpfungen oder n x m Multiplikationen oder n x m Skalar-Produkte etc. notwendiger Weise tatsächlich ausgeführt werden müssen. So ist typischer Weise auch nicht jeder der n x m möglichen Korrelationsfilter vorhanden. Es kann also sein, dass einzelne der n x m Signale zu Null gesetzt werden oder weggelassen werden.

Zur Vereinfachung wird im Folgenden allgemein von der Regelwertmatrix ($YI_{i,j}$) oder dem Regelwertsignal ($yi_{i,j}$(t)) gesprochen. Es ist damit stets eine der zuvor beschriebenen Regelwertmatrizen ($YI_{1\_i,j}$, $YI_{2-i,j}$, $YI_{3-i,j}$, $YI_{4\_i,j}$, $YI_{5\_i,j}$, $YI_{6-i,j}$) bzw. Regelwertsignale ($yi_{1\_i,j}$(t), $yi_{2\_i,j}$(t), $yi_{3\_i,j}$(t), $yi_{4-i,j}$(t), $yi_{5\_i,j}$(t), $yi_{6-i}$j(t)) oder eine Kombination derselben gemeint, ohne diese näher zu spezifizieren. Zur weiteren Vereinfachung wird häufig anstatt von $yi_{i,j}$(t) oder s(t) lediglich von $yi_{i,j}$ oder s gesprochen, wobei das gleiche gemeint ist. Dies betrifft auch die Ansprüche.

In vielen technischen Realisierungen kommt es vor, dass das erfindungsgemäße Sensorsystem einen erster Speicher (ME1) einschließt, der bevorzugt mindestens eines der Regelwert-Signale ($yi_{i,j}$(t)) für zumindest einen Speicherzeitpunkt ($t_n$) enthält. Die Regelwert-Signale ($yi_{i,j}$($t_n$)), die im Folgenden auch als $yin_{i,j}$ bezeichnet werden, sind in einer zugehörigen Regelwert-Matrix ($YI_{i,j}$($t_n$)), die im Folgenden als $YIn_{i,j}$ bezeichnet wird, zusammengefasst.

Eine andere Realisierung weist bevorzugt mindestens einen ersten Integrator (INT11) auf, der mindestens eines der Regelwert-Signale ($yi_{i,j}$(t)) und/oder mindestens eines der gespeicherten Regelwert-Signale ($yi_{i,j}$($t_n$)) integriert oder eine äquivalente Funktion ausführt. Die Ausgangssignalmatrix ($XI_{i,j}$) des ersten Integrators (INT1) wird im Folgenden auch als Matrix der integrierten Regelwert-Signale ($xi_{i,j}$(t)) der ersten Integrationseinheit (INT1) bezeichnet. Der erste Integrator (INT1) hat dabei typischerweise die Aufgabe, die Regelfehler zu minimieren.

In einer weiteren bevorzugten Realisierung weist das erfindungsgemäße System mindestens einen zweiten Speicher (ME2) auf, der beispielsweise mindestens eines der Regelwert-Signale ($yi_{i,j}(t)$) und/oder eines der gespeicherten Regelwert-Signale $yin_{i,j}$, ($yi_{i,j}(t_n)$) und/oder eines der integrierten Regelwert-Signale ($xi_{i,j}(t)$) für zumindest einen Speicherzeitpunkt ($t_m$) enthält.

Der Schätzer und/oder der nicht-lineare Filter können verschiedene Eingangssignale haben. Eines dieser Eingangssignale kann beispielsweise sein:

- ein Regelwert-Signal ($yi_{i,j}(t)$) der Regelwert-Matrix ($YI_{i,j}$),

- ein gespeichertes Regelwert-Signal ($yi_{i,j}(t_n)$) (Ausgangssignal), das zu einem Speicherzeitpunkt ($t_n$) in der ersten Speichereinheit (ME1) gespeichert wird,

- ein integriertes Regelwert-Signal ($xi_{i,j}(t)$) als Ausgangssignal der ersten Integrationseinheit (INT1),

- ein Ausgangssignal (Regelwert-Signal) ($zi_{i,j}(t_m)$) des zweiten Speichers (ME2), das zu einem Speicherzeitpunkt ($t_m$) in dem zweiten Speicher (ME2) gespeichert wird.

In einer bevorzugten Ausführungsform des erfindungsgemäßen Systems werden die Eingangssignale des Schätzers weiterverarbeitet, bevor sie der Rücktransformations-Einheit zugeführt werden. In einer besonderen Ausführung des erfindungsgemäßen Systems weist ein optionaler nicht-linearer Filter (NLF) Ausgangssignale ($nf_{i,j}(t)$) auf, die Teil der Ausgangssignalmatrix ($NF_{i,j}$) des nicht-linearen Filters (NLF) sind. Von den Ausgangssignalen ($nf_{i,j}(t)$) des nicht-linearen Filters (NLF) kann beispielsweise eines oder mehrere in einem zweiten Integrator (INT2) integriert werden. Dieses integrierte Ausgangssignal ($inf_{i,j}(t)$) des nicht-linearen Filters (NLF) ist wiederum Teil der integrierten Ausgangssignalmatrix ($INF_{i,j}$) der zweiten Integratoreinheit (INT2). Auch diese zweite Integratoreinheit (INT2) hat typischerweise die Aufgabe, den Regelfehler zu minimieren.

In einer weiteren bevorzugten Ausführungsform des Sensorsystems wird beispielsweise eines der Schätzer-Ein- oder Ausgangssignale ($nf_{i,j}(t)$) des nicht-linearen Filters (NLF) und/oder eines der integrierten Ausgangssignale ($inf_{i,j}(t)$) der zweiten Integratoreinheit (INT2) durch einen Verstärker (V) verstärkt. Dessen Ausgangssignale ($S4_{i,j}(t)$) sind wiederum Teil der Ausgangssignalmatrix der Verstärkereinheit V, bevor sie zur Rücktransformations-Einheit gelangen. In einer besonderen Ausführung des erfindungsgemäßen Systems weist das System neben dem Schätzer auch den besagten nicht-linearen Filter (NLF) auf. Dessen Ausgangssignale ($nf_{i,j}(t)$) sind die Teil der Ausgangssignalmatrix ($NF_{i,j}$) dieses nicht-linearen Filters (NLF). Anstelle der Schätzer-Eingangssignale werden dann die Ausgangssignale $nf_{i,j}(t)$ in dem zweiten Integrator (INT2) und/oder dem Verstärker (V) weiterverarbeitet.

Die Rücktransformations-Einheit des erfindungsgemäßen Sensorsystems umfasst in einer bevorzugten Ausführungsform eine Senderücktransformation (SRT) mittels der das Speisesignal (S5) des Senders (H) erzeugt wird. Ein Multiplikator ($M5_{ij}$) (Multipliziereinheit) multipliziert ein mit einer Filterfunktion (f()) in einem Filter gefiltertes Ausgangsignal ($nf_{i,j}(t)$) des nicht-linearen Filters (NLF) oder ein daraus abgeleitetes Signal ($INF_{i,j}(t),S4_{i,j}(t)$) mit einem zugeordneten Wavelet ($s6_{i,j\_5}$) zu einem Rohsendesignal ($F_{i,j\_5}(t)$). Das Ausgangssignal ($nf_{i,j}(t)$) des nicht-linearen Filters (NLF) kann integriert ($INF_{i,j}(t)$) und/oder verstärkt ($S4_{i,j}(t)$) sein. Die Wavelet-Signale ($s_{i,j}(t)$) können bei dieser Multiplikation beispielsweise verzögert sein. Ein zweiter Summierer ($\Sigma 2$) erzeugt bevorzugt aus allen diesen Rohsendesignalen ($F_{i,j\_5}(t)$) durch Summierung das Speisesignal (S5). Es ist für den Fachmann offensichtlich, dass in dem Fall, wenn die Filterfunktion (f()) eine Konstante für ein einzelnes ($s6_{i,j\_5}(t)$) liefert, und alle anderen ($s6_{k,l\_5}(t)$) gleich null gesetzt werden, das Sendesignal (S5) gleich dem jeweiligen ($s6_{i,j\_5}(t)$) Signal ist.

Bevorzugt können also folgende Signale in der Senderücktransformation (SRT) verarbeitet werden:

Ein Eingangssignal ($S4_{i,j}(t)$) des Filters (f()) der Senderücktransformation (SRT) kann das Verstärkerausgangssignal ($S4_{i,j}(t)$) und/oder das integrierte Ausgangssignal ($inf_{i,j}(t)$) und/oder das Schätzer-Eingangssignal oder das Ausgangssignal des Filters bzw. das Ausgangssignal ($nf_{i,j}(t)$) des nicht-linearen Filters (NLF) sein. Das jeweils gefilterte Signal ($S6_{i,j\_5}(t)$) wird dem Multiplikator ($M5_{ij}$) zugeführt. Hier wird es mit einem zugeordneten Wavelet-Signal ($s_{i,j}(t)$, $s_{i,j\_b}(t)$ oder verzögerten Wavelet ($s_{i,j\_5}(t)$) (bei Vorhandensein des zusätzlichen nicht-linearen Filters) multipliziert.

Es wird das Rohsendesignal ($F_{i,j\_5}(t)$), auch Speisevorsignal genannt, gebildet. Die Rohsendesignale werden in dem Summierer ($\Sigma 2$) zu dem Speisesignal (S5) des Senders summiert.

Die Filterfunktion (f()) kann für ein oder mehrere der Ausgangssignale, unabhängig von dem Eingangssignal des Filters (Verstärkerausgangssignal ($S4_{i,j}(t)$), integriertes Ausgangssignal ($inf_{i,j}(t)$), Schätzer-Eingangssignal ($zi_{i,j}(t)$), Ausgangssignal des nicht-linearen Filters ($nf_{i,j}(t)$)), dabei ausdrücklich auch eine Konstante sein. Auch müssen nicht alle Rohsendesignale ($F_{i,j\_5}(t)$) gebildet werden. Dies kann bedeuten, dass sie auf einen festen Wert, beispielsweise 1 oder 0, gesetzt oder weggelassen werden können.

Ähnliches gilt für die Erzeugung des Kompensatorspeisesignals (S3). Die Rücktransformations-Einheit umfasst in diesem Fall bevorzugt eine Kompensationsrücktransformation (KRT) mit einer dritten Multipliziereinheit ($M3_{ij}$).

In einer weiteren bevorzugten Ausführungsform des Sensorsystems umfasst die Rücktransformations-Einheit die Kompensationsrücktransformation (KRT) mittels der das Kompensationssendesignal (S3) des Kompensators erzeugt wird.

Die der Senderrücktransformation (SRT) entsprechende Kompensationsrücktransformation (KRT) umfasst bevorzugt die dritte Multipliziereinheit ($M3_{ij}$), die bevorzugt eines der obengenannten Signale nach Filterung in einem Filter mit einer Filterfunktion (g()) mit einem zugeordneten Wavelet-Signal ($s_{i,j}(t)$) zu einem Rohkompensationssignal ($F_{i,j\_3}(t)$) multipliziert. Die jeweiligen Rohkompensationssignale ($F_{i,j\_3}(t)$) werden als Ausgangssignale in einem (ersten) Summierer ($\Sigma 1$) zu dem Kompensationssendesignal (S3) summiert.

Bevorzugt wird also in der dritten Multipliziereinheit ($M3_{ij}$) der Kompensationsrücktransformation (KRT) ein mit einer Filterfunktion (g()) gefiltertes Eingangssignal mit je einem zugeordneten Wavelet-Signal ($s_{i,j}(t)$) zu dem Rohkompensationssignal $F_{i,j\_3}(t)$ multipliziert. Der erste Summierer ($\Sigma 1$) erzeugt aus allen diesen Rohkompensationssignalen ($F_{i,j\_3}(t)$) durch Summierung das Kompensationssendesignal (S3). Als Eingangssignal des Filters wird das Schätzereingangssignal ($zi_{i,j}(t)$) und/oder das Verstärkerausgangssignal ($S4_{i,j}(t)$) und/oder das integrierte Ausgangssignal des zweiten Integrators ($inf_{i,j}(t)$) und/oder Ausgangssignal des nicht-linearen Filters ($nf_{i,j}(t)$) verwendet.

Die Filterfunktion des Filters (g()) kann dabei ausdrücklich auch für ein oder mehrere Ausgangssignale eine Konstante bilden, so dass das Ausgangssignal ($S6_{i,j\_3}(t)$) eine Konstante ist. Auch müssen nicht alle Rohkompensationssignale ($F_{i,j\_3}(t)$) gebildet werden. Dies kann bedeuten, dass sie auf einen festen Wert, beispielsweise 1 oder 0, gesetzt oder weggelassen werden können.

Selbstverständlich kann die Rücktransformations-Einheit des erfindungsgemäßen Sensorsystems sowohl die Senderrücktransformation (SRT) als auch die Kompensationsrücktransformation (KRT) umfassen.

In einer weiteren bevorzugten Ausführungsform des erfindungsgemäßen Sensorsystems mit einem optionalen zusätzlichen nicht-linearen Filter (NLF) steuert der nicht-lineare Filter (NLF) zumindest die Verzögerung eines der Wavelet-Signale ($s_{i,j}(t)$) zu zumindest einem verzögerten ersten Wavelet-Signal ($s_{i,j\_5}(t)$) durch eine erste Verzögerungsvorrichtung ($\Delta t1$) und/oder die Verzögerung mindestens eines der Wavelet-Signals ($s_{i,j}(t)$) zu zumindest einem verzögerten zweiten Wavelet-Signal ($s_{i,j\_3}(t)$) durch eine zweite Verzögerungsvorrichtung ($\Delta t2$). Statt einer Verzögerungseinrichtung kann es sich dabei bevorzugt jeweils auch um einen Phasenschieber handeln. Daher wird der Begriff "Verzögerungseinrichtung" im Folgenden als Synonym für eine Einrichtung verwendet, die eine gesteuerte Verzögerung und/oder eine gesteuerte Phasenschiebung verursacht. Diese Verwendung gilt auch für die Ansprüche.

In einer weiteren bevorzugten Ausführungsform des erfindungsgemäßen Sensorsystems wird mindestens ein Speisesignal (S5) und/oder mindestens ein Kompensationssendesignal (S3) mit einem Offset versehen.

In einer weiteren bevorzugten Ausführungsform des Sensorsystems befindet sich mindestens ein linearer Filter und/oder mindestens ein erster Integrator (INT1) im Signalpfad nach der Verarbeitungseinheit (LF) mit der Linearform und bevorzugt vor dem Eingang des Schätzers und weiter bevorzugt vor dem optionalen nicht-linearen Filter (NLF).

In einer weiteren bevorzugten Ausführungsform des Systems befindet sich mindestens ein linearer Filter und/oder mindestens ein zweiter Integrator (INT2) im Signalpfad hinter dem ersten Integrator (INT1) und bevorzugt hinter dem optionalen nicht-linearen Filter (NLF). Die Komponenten sind jedenfalls nicht vor dem Eingang des Schätzers angeordnet.

Im Rahmen der Erfindung wurde erkannt, dass - im Gegensatz zum Stand der Technik - die Position der linearen Elemente nicht mehr beliebig längs der Signalkette verschoben werden kann. Vielmehr hängt deren Wirkung im erfindungsgemäßen Sensorsystem von der Positionierung vor oder hinter dem Eingang des Schätzers bzw. vor oder hinter dem optionalen nicht-linearen Filter (NLF) ab. In der Regel ist jedoch eine Verschiebung längs des Signalpfades zwischen Empfänger und Eingang des Schätzers für lineare Verarbeitungskomponenten möglich. Analog ist dies auch für lineare Verarbeitungskomponenten, die zwischen dem Eingang des Schätzers bzw. dem optionalen nicht-linearen Filter (NLF) auf der einen Seite und dem Sender (H) oder dem Kompensator (K) auf anderen Seite liegen, möglich. Für einen Fachmann wird eine Minimierung des Realisierungsaufwands bei der Positionierung ausschlaggebend sein.

In einer weiteren bevorzugten Ausführungsform des erfindungsgemäßen Sensorsystems ist die Dimension der n x m Matrizen, beispielsweise $S_{i,j}$, $YI_{i,j}$, $YIn_{i,j}$, $XI_{i,j}$, $ZI_{i,j}$, $NF_{i,j}$, $INF_{i,j}$, $S4_{i,j}$, etc., entweder

    n mindestens 2 und m mindestens 1 oder
    n mindestens 1 und m mindestens 2 oder
    n mindestens 1 und m mindestens 1.

Im letzteren Fall muss jedoch ein Zeitmultiplex für die Verarbeitung statt des bisher beschriebenen Raummultiplexes verwendet werden. Zwischenwerte müssen bei einem Zeitmultiplex zwischengespeichert werden.

In einer weiteren bevorzugten Ausführungsform des erfindungsgemäßen Sensorsystems kann der optionale nicht-lineare Filter (NLF) durch mindestens ein Signal mindestens einer der Regelwert-Matrizen ($YI_{1\_i,j}$, $YI_{2-i,j}$, $YI_{3\_i\cdot j}$,

$YI_{4-i,j}$, $YI_{5\_i,j}$, $YI_{6\_i,j}$) und/oder mindestens einer der daraus abgeleiteten Matrizen ($XI_{i,j}$, $ZI_{i,j}$, $M_{ref\_i,j}$) mittels des Schätzers (EST) gesteuert werden.

Bei der Signalmatrix $M_{ref\_i,j}$ handelt es sich um eine Matrix mit abgespeicherten Werten mindestens einer der Regelwert-Matrizen ($YI_{1\_i,j}$, $YI_{2-i,j}$, $YI_{3\_i,j}$, $YI_{4\_i,j}$, $YI_{5\_i,j}$, $YI_{6\_i,j}$) und/oder mindestens einer der daraus abgeleiteten Matrizen ($XI_{i,j}$, $ZI_{i,j}$). Die Speicherung erfolgt in dem Referenzspeicher (MRef). In dem Referenzspeicher (MRef) werden Referenzwerte dieser Matrizen abgespeichert, die aus einer Referenzmessung mit einem Referenzsender (R) gewonnen wurden.

In einer weiteren bevorzugten Ausführungsform des erfindungsgemäßen Sensorsystems ermittelt ein Schätzer auf Basis mindestens eines Signals mindestens einer der Regelwert-Matrizen ($YI_{1\_i,j}$, $YI_{2\_i,j}$, $YI_{3\_i,j}$, $YI_{4-i,j}$, $YI_{5\_i,j}$, $YI_{6\_i,j}$) und/oder mindestens einer der daraus abgeleiteten Matrizen ($XI_{i,j}$, $ZI_{i,j}$, $M_{ref\_i,j}$) die wahrscheinlichen Zeitpunkte des Eintreffens der Eingangssignalanteile (S0e(t)) des Empfängerausgangssignals (S0(t)) und/oder der korrespondierenden Ausgangsignalanteile (S1e(t)) des kompensierten modifizierten Empfängerausgangssignals (S1(t)). Diese ermöglichen eine Aussage über die Entfernung zu einem Objekt.

In einer weiteren bevorzugten Ausführungsform des erfindungsgemäßen Sensorsystems wird das Speisesignal (S5) durch gewichtete oder ungewichtete Summierung aus den Wavelet-Signalen ($s_{i,j}(t)$) erzeugt oder kann aus diesen erzeugt werden.

In einer weiteren bevorzugten Ausführungsform weist das Sensorsystem einen Referenzsender (R) auf, der zumindest zeitweise mit dem Speisesignal (S5) gespeist wird und zumindest zeitweise ein Referenzsignal (S11) direkt zu dem Empfänger sendet. Dieses Referenzsignal (S11) wird bevorzugt am Empfänger (D) als Referenzempfangssignal (S0r(t)) empfangen und in der Verarbeitungseinheit (LF) weiterverarbeitet. Dabei wird in einem Referenzspeicher ($MRef_{i,j}$) bevorzugt zumindest ein Signal (Regelwert-Signal) mindestens einer der Matrizen $YI_{i,j}$, (auch $YI_{1\_i,j}$, $YI_{2\_i,j}$, $YI_{3\_i,j}$, $YI_{4\_i,j}$, $YI_{5\_i,j}$, $YI_{6\_i,j}$), $YIn_{i,j}$, $XI_{i,j}$ oder $ZI_{i,j}$ als Referenzinformation abgelegt. Dabei umfasst die Regelwert-Matrix ($YIn_{i,j}$) die Regelwert-Signale ($yi_{i,j}(t_n)$) vorzugsweise zum Zeitpunkt ($t_n$). Die Zurverfügungstellung von $ZI_{i,j}$ ist zur Vereinfachung in den Zeichnungen nicht aufgeführt.

In einer weiteren bevorzugten Ausführungsform des erfindungsgemäßen Sensorsystems wird das Referenzempfangssignal (S0r(t)) in der Verarbeitungseinheit weiterverarbeitet. Bevorzugt wird mindestens eine der Regelwert-Matrizen ($YI_{1\_i,j}$, $YI_{2\_i,j}$, $YI_{3\_i,j}$, $YI_{4\_i,j}$, $YI_{5\_i,j}$, $YI_{6\_i,j}$, $YIn_{i,j}$, $XI_{i,j}$, $ZI_{i,j}$) in mindestens einem Referenz-Speicher (MRef) der Verarbeitungseinheit zumindest teilweise abgespeichert. Die Speicherung erfolgt bevorzugt wenigstens für einen vorgegebenen Zeitraum. Bevorzugt werden wenigstens einige der Regelwert-Signale mindestens einer der Regelwert-Matrizen zur Kompensation der spezifischen Übertragungseigenschaften mindestens eines Senders (H) und eines Empfängers (D) verwendet, wobei auch die gerätespezifischen Eigenschaften kompensiert werden können.

Bevorzugt weist die Verarbeitungseinheit des Sensorsystems eine Speichereinheit (ME1, ME2, MRef) auf, in der Werte mindestens einer der Regelwert-Matrizen ($YI_{1\_i,j}$, $YI_{2\_i,j}$, $YI_{3\_i,j}$, $YI_{4-i,j}$, $YI_{5\_i,j}$, $YI_{6\_i,j}$ $YIn_{i,j}$, $XI_{i,j}$, $ZI_{i,j}$) gespeichert werden. Gleichzeitig kann die Speichereinheit bevorzugt mindestens einen dieser Werte mindestens einer der Regelwert-Matrizen in einer zeitlichen Tiefe von mehr als einem Wert speichern.

In einer weiteren bevorzugten Ausführungsform des Sensorsystems wird mindestens eine der Regelwert-Matrizen ($YI_{1\_i,j}$, $YI_{2\_i,j}$, $YI_{3\_i,j}$, $YI_{4-i,j}$, $YI_{5\_i,j}$, $YI_{6\_i,j}$) und/oder eine der Matrizen ($YIn_{i,j}$, $XI_{i,j}$, $ZI_{i,j}$) in einer Echo-Auswerteeinheit derart weiterverarbeitet, dass die Echoanteile des Empfangssignals oder ein Echo-Zeitsignal bestimmt werden. Dabei kann auch das Echo-Zeitsignal ausgegeben oder weiterverarbeitet werden, bevorzugt um daraus die Entfernung zu einem Objekt zu bestimmen.

In einer weiteren bevorzugten Ausführungsform des Sensorsystems wird auf dieser Grundlage auf das Vorhandensein weiterer Objekte geschlossen, deren Entfernung bevorzugt aber nicht bestimmt wird. Dies kommt immer dann zum Tragen, wenn die Objektortungskapazität des Systems bereits ausgeschöpft ist. Alternativ können auch die Entfernungen zu mehreren Objekten bestimmt werden.

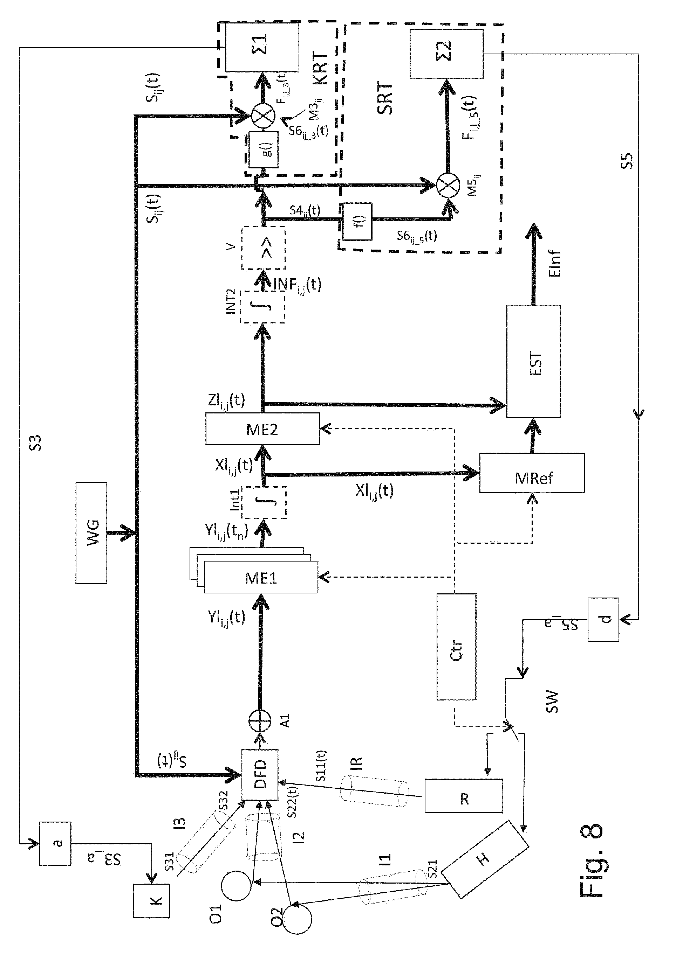

Zum besseren Verständnis wird die vorliegende Erfindung nochmals anhand der Figuren 5 bis 20 erläutert. Die hier dargestellten Besonderheiten können jedoch auch einzeln und in einer anderen Kombination und Zusammensetzung verwendet werden. Es müssen nicht alle in den Figuren dargestellten Elemente und Komponenten in bevorzugten Ausführungsformen vorhanden sein. (In den Figuren werden die Signale teilweise mit Großbuchstaben bezeichnet, während sie in der Beschreibung mit Kleinbuchstaben bezeichnet sind, um sie von den Matrizen zu unterscheiden und das Verständnis zu fördern.)

Figur 5 zeigt ein Beispiel einer erweiterten erfindungsgemäßen Vorrichtung, die neben den aus dem Stand der Technik bekannten Komponenten eine Drift-Field Diode (DFD) als Empfänger (D) umfasst. Die Drift-Field-Diode (DFD) umfasst eine Empfänger-Photodiode und die Verarbeitungseinheit mit der Linearform. Zusätzlich weist das System bevorzugt auch einen Schätzer (EST) und einen Referenzspeicher (MRef) auf. Darüber hinaus ist im Signalpfad hinter der Verarbeitungseinheit (LF), die die Linearform umfasst, eine Speichereinheit (ME1), eine optionaler Integrator (INT1) und ein weiterer Speicher (ME2) angeordnet. Durch Speicherung und Integration werden die Regelwertsignale ($yi_{i,j}(t)$) entsprechend umgewandelt, so dass am Ende dieser Signal-Teilstrecke, also am Ausgang der zweiten Speichereinheit (ME2) die Ausgangssignale ($zi_{i,j}(t)$) zur Verfügung stehen. Diese Signale werden dem Schätzer (EST) zugeführt.

Die Ausgangssignale ($zi_{i,j}(t)$) der zweiten Speichereinheit (ME2) werden darüber hinaus auch weiterverarbeitet, um das Speisesignal (S5) für den Sender (H) zu generieren und das Kompensatorspeisesignal (S3) für den Kompensator (K) zu generieren. Dies geschieht in der Rücktransformations-Einheit, die die Senderücktransformation (SRT) und die Kompensationsrücktransformation (KRT) umfasst. Bevor die Ausgangssignale ($zi_{i,j}(t)$) der zweiten Speichereinheit (ME2) zu der Rücktransformations-Einheit (SRT, KRT) gelangen, können sie bevorzugt mittels eines optionalen Integriergliedes (INT2) und gegebenenfalls über einen ebenfalls optionalen Verstärker (V) weiterverarbeitet werden.

Die beiden Speichereinheiten (erster Speicher (ME1) und zweiter Speicher (ME2)) werden durch eine Steuereinheit (Ctr) bedarfsgerecht angesteuert.

Der Referenzspeicher (MRef) wird mit dem im ersten Integrator (INT1) erzeugten integrierten Regelwertsignal ($xi_{i,j}(t)$) gespeist. Seine Funktion und die Erzeugung der dort abgelegten Regelwert-Signale werden später noch erläutert. Die im Referenzspeicher (MRef) abgespeicherten Signale werden dann an den Schätzer (EST) übergeben und dort gemeinsam mit den Ausgangssignalen ($zi_{i,j}(t)$) der zweiten Speichereinheit (ME2) verarbeitet, um das Echo-Informationssignal (EInf) zu erzeugen, aus dem auf die Entfernung eines Objekts (O1, O2) zu dem Sensorsystem geschlossen werden kann.

Eine Signalerzeugungs-Einheit umfasst den Wavelet-Generator (WG), der wenigstens ein Wavelet-Signal ($s_{i,j}(t)$) erzeugt und in das System einspeist. Das Wavelet-Signal ($s_{i,j}(t)$) wird zum einen der ersten Verarbeitungseinheit mit der Linearform (LF) zugeführt. Darüber hinaus wird es auch der Senderücktransformationseinheit (SRT) und der Kompensationsrücktransformationseinheit (KRT) zugeführt. Somit lässt sich sowohl der Kompensationssender (K) wie auch der Sender (H) regeln, um das System auszuregeln und einen stabilen Zustand zu erzeugen. Ziel ist es, das am Empfänger (D, DFD) nur noch ein Gleichsignal, bevorzugt ein Nullsignal anliegt. Hierbei sind Regelfehler und ein Signalrauschen zu vernachlässigen. Es wird darauf hingewiesen, dass das System auch nur den Sender (H) und das Senderspeisesignal (S5) oder nur das Kompensationsspeisesignal (S3) und den Kompensationssender (K) regeln kann. In dem gezeigten Beispiel werden jedoch bevorzugt beide Signale gleichzeitig geregelt.

Zur Erzeugung des Kompensatorspeisesignals (S3) wird das am Eingang der Rücktransformations-Einheit (SRT, KRT) anliegende Signal ($S4_{i,j}(t)$) einer Filtereinheit mit der Filterfunktion g() zugeführt. Nach Filterung mit diesem Kompensationsrücktransformationsfilter erfolgt eine Multiplikation mit dem Wavelet-Signal ($s_{i,j}(t)$) in einer Multipliziereinheit ($M3_{i,j}$). Dadurch entsteht das Rohkompensationssignal ($F_{i,j\_3}(t)$). Dieses wird durch einen ersten Summierer ($\Sigma 1$) zum Kompensatorspeisesignal (S3) aufsummiert.

Die Erzeugung des Senderspeisesignals (S5) erfolgt analog. Das Eingangssignal ($S4_{i,j}(t)$) wird in einer zweiten Filtereinheit mit der Filterfunktion f() gefiltert und anschließend in einer Multipliziereinheit ($M5_{i,j}$) mit einem Wavelet-Signal ($s_{i,j}(t)$) multipliziert. Das so gebildete Rohsendesignal ($F_{i,j\_5}(t)$) wird anschließend in einem zweiten Summierer ($\Sigma 2$) aufsummiert, wodurch das Senderspeisesignal (S5) entsteht.

Prinzipiell ist es auch denkbar, statt eines Wavelet-Generators WG bevorzugt einen ersten Wavelet-Generator WG und einen zweiten Wavelet-Generator WG_II zu verwenden, die beispiels- und vorzugsweise über eine Leitung (sync) miteinander synchronisiert sind. Dies ist insbesondere bei einer nicht-linearen Verzerrung der Kanäle oder des Empfangs durch den Empfänger von Vorteil. Hierzu sei auf die bereits beschriebene multiplizierende Überlagerung im Empfänger D verwiesen.

Dies ist nur ein bevorzugtes Beispiel für die Verwendung mehrerer Wavelet-Generatoren (WG, WG_II), deren Zahl nicht auf zwei beschränkt sein muss. Es ist beispielsweise auch denkbar, einen ersten Wavelet-Generator (WG) für die Ansteuerung eines Teils der Vorrichtung zu benutzen, die eine Linearform (LF) erstellt, einen zweiten Wavelet-Generator (WG_II) für die Erzeugung eines Kompensatorspeisesignals (S3) zu verwenden, und einen dritten Wavelet-Generator (WG_III) für die Erzeugung eines Sendesignals (S5) zu verwenden.

Werden beispielsweise mehr als ein Sender (H) und/oder mehr als ein Empfänger (D, DDS) und/oder mehr als ein Kompensationssender (K) mit zugehörigen Signalen verwendet, so sind bevorzugt noch mehr Wavelet-Generatoren denkbar.

Im Folgenden wird zur Vereinfachung im Wesentlichen nur der Fall mit einem Wavelet-Generator (WG) beschrieben.

Aus dem Stand der Technik ist es bekannt, dass es günstig ist, hinter der ersten Verarbeitungseinheit mit der Linearform (LF) eine Signalformung einzusetzen und so statt eines einfachen Proportionalreglers (P-Regler) beispielsweise einen Regler mit PI-Eigenschaften zu erhalten. Dies geschieht im Stand der Technik durch Einsatz eines Integrators. Im Gegensatz zum Stand der Technik ist es nun aber, wie bereits skizziert, nicht äquivalent, ob eine solche Signalformung durch Integration vor oder hinter dem optionalen nicht-linearen Filter (NLF) (Figur 7) eingesetzt wird.

In den bevorzugten Ausführungsformen gemäß Figur 5 bis 9 kann jeweils eine zweite Integratoreinheit (INT2) als ein Beispiel für eine mögliche Signalformung hinter dem zweiten Speicher (ME2) bzw. hinter dem optionalen nicht-linearen Filter (NLF) (Figur 7) eingefügt sein. Die beispielhafte zweite Integratoreinheit (INT2) erzeugt durch jeweils separate Integration der Signale der Ausgangssignalmatrix ($NF_{i,j}$) des nicht-linearen Filters (NLF) die Signale ($in\text{-}f_{i,j}(t)$) der integrierten Ausgangssignalmatrix ($INF_{i,j}$) der zweiten Integretionseinheit (INT2). Mit diesen Signalen ($inf_{i,j}(t)$) der integrierten Ausgangssignalmatrix ($INF_{i,j}$) der zweiten Integrationseinheit (INT2) können beispielsweise die Vorrichtungen zur Verknüpfung mit der ersten Gewichtungsmatrix g() und der zweiten Gewichtungsmatrix f() direkt beaufschlagt werden. In den Figuren 5 bis 9 sind jedoch noch eine mögliche (optionale) Verstärkereinheit (V) dazwischen geschaltet, die bevorzugt die verstärkte Ausgangssignalmatrix ($S4_{i,j}$) der Verstärkereinheit (V) durch Verstärkung der Signale ($nf_{i,j}(t)$) der Ausgangssignalmatrix ($NF_{i,j}$) des nicht-linearen Filters (NLF) (Fig. 7) und/oder der Signale ($inf_{i,j}(t)$) der integrierten Ausgangssignalmatrix ($INF_{i,j}$) der zweiten Integratoreinheit (INT2) erzeugt. In der Regel kann ein Signal ($S4_{i,j}(t)$) der verstärkten Ausgangssignalmatrix ($S4_{i,j}$) der Verstärkereinheit (V) als Ausgangssignal bereits genutzt werden. Es ist jedoch relativ unhandlich und für die Integration in eine integrierte Schaltung nicht wirklich geeignet. Es sollte dabei nicht unerwähnt bleiben, dass die Verstärkung der einzelnen Kanäle typischerweise, aber nicht immer, gleich gewählt wird.

Wie bereits erwähnt, führt eine Verschiebung des typischerweise linearen Verstärkers (V) oder der Signalformung, beispielsweise in Form des Integrators (INT2), an eine Position vor dem bevorzugten nicht-linearen Filter (NLF) nicht zu einem äquivalenten (gleichen) Ergebnis, sondern verändert dieses und das Verhalten des Sensorsystems insgesamt. Bei einer Verschiebung einer solchen Einheit an eine Position innerhalb des Signalteilpfades beginnend mit dem Ausgang des optionalen nicht-linearen Filters (NLF) und endend vor dem Kompensationssender (K) und/oder dem Sender (H), entspricht das im Wesentlichen einer Äquivalenzumformung des erfindungsgemäßen Systems. Da die Komponenten, die dem nicht-linearen Filter bzw. den Speisungspunkten des Schätzers (EST) folgen, allesamt linear sind, ist die Reihenfolge dieser Komponenten kommutativ und in der Regel nur von der Notwendigkeit bestimmt, eine Übersteuerung zu vermeiden. Im Sinne dieser Offenbarung kann bevorzugt die Reihenfolge dieser Komponenten daher nahezu beliebig gewählt werden. Deren Ausformung richtet sich dabei jedoch, wie bereits erwähnt, an die jeweiligen Anforderungen. Wird beispielsweise die Verstärkereinrichtung unmittelbar vor den Kompensationssender platziert, so handelt es sich in der Regel nur um einen einzelnen Verstärker. Bei einer Platzierung, wie beispielsweise in Figur 7, handelt es sich in der Regel bevorzugt um eine Vielzahl von Verstärkern, deren Verstärkung, wie zuvor erwähnt, unterschiedlich gewählt werden kann. In der Regel ist sie jedoch gleich. Unterschiedliche Verstärkungen sind insbesondere dann von Vorteil, wenn verschiedene Wavelet-Typen gleichzeitig eingesetzt werden, die sich für unterschiedliche Erkennungsaufgaben unterschiedlich gut eignen. Die optimale Topologie eines erfindungsgemäßen Systems wird sich in der Regel an dem zu lösenden Problem orientieren.

Wie bereits erwähnt, kann eine Signalformung auch vor dem nicht-linearen Filter (NLF) platziert werden. In dem bevorzugten Beispiel der Figur 7 ist dies eine erste Integratoreinheit (INT1), die aus den Regelwertsignalen ($yi_{i,j}(t)$) der Ausganssignalmatrix ($YI_{i,j}$) der Linearform (Verarbeitungseinheit) (LF) die zugehörigen integrierten Signale ($xi_{i,j}(t)$) der Ausgangssignalmatrix ($XI_{i,j}$) der ersten Integrationseinheit erzeugt. Die Signale ($xi_{i,j}(t)$) der Ausgangssignalmatrix ($XI_{i,j}$) der ersten Integrationseinheit (INT1) werden dann anstelle der Regelwertsignale ($yi_{i,j}(t)$) der Ausgangssignalmatrix ($YI_{i,j}$) der Linearform (LF) als Eingangssignal für das nicht-lineare Filter (NLF) verwendet.

Sowohl die Regelwertsignale ($yi_{i,j}(t)$) der Ausgangssignalmatrix ($YI_{i,j}$) der Linearform (LF) als auch die Signale ($xi_{i,j}(t)$) der Ausgangssignalmatrix ($XI_{i,j}$) der ersten Integrationseinheit (INT1) können als Ausgangssignale des Systems zur weiteren Verarbeitung verwendet werden.

Es hat sich im Rahmen der Erfindung gezeigt, dass es günstig sein kann, nicht nur die aktuellen Werte der Signale ($yi_{i,j}(t)$) der Ausgangssignalmatrix ($YI_{i,j}$) der Linearform (LF) zu verwenden, sondern auch vergangene Werte der Signale ($yi_{i,j}(t)$) zu einem oder mehreren früheren Zeitpunkten, z.B. bevorzugt auch um Ableitungen dieser Größen verwenden zu können. In den Figuren 5 bis 9 ist beispielhaft eine bevorzugte zusätzliche erste Speichereinheit ME1 vorgesehen, die die Werte der Signale ($yi_{i,j}(t)$) der Ausgangssignalmatrix ($YI_{i,j}$) der Linearform (LF) zwischenspeichern kann. Spätestens an dieser Stelle ist es offensichtlich vorteilhaft und bevorzugt, zumindest einen Teil des Signalpfads digitalisiert und/oder insbesondere durch einen Signalprozessor zu realisieren. Insofern können bevorzugt mehrere oder alle der zuvor beschriebenen Funktionalitäten des Sensorsystems in einem einzelnen Regler (Ctr) durchgeführt werden. In dem bevorzugten Beispiel von Figur 5 bis 9 werden die Ausgangssignale ($yi_{i,j}(t_n)$) der ersten Speichereinheit (ME1) statt der Regelwertsignale ($yi_{i,j}(t)$) der Ausgangssignalmatrix ($YI_{i,j}$) der Linearform (LF) als Eingangssignale der ersten Integrationseinheit (INT1) verwendet. Natürlich ist es auch denkbar, diese direkt in den optionalen nicht-linearen Filter (NLF) (Fig. 7) oder den optionalen Schätzer einzuspeisen.

Andere bevorzugte Positionierungen solcher Speicher sind denkbar. So ist es beispielsweise, wie in Figur 5 dargestellt, auch möglich, eine zweite Speichereinheit (ME2) vorzusehen, die bevorzugt die Werte der Signale ($xi_{i,j}(t)$) der Ausgangssignalmatrix ($XI_{i,j}$) der ersten Integrationseinheit (INT1) zwischenspeichert. Die Signale ($zi_{i,j}(t)$) der Ausgangssignalmatrix ($ZI_{i,j}$) der bevorzugten zweiten Speichereinheit (ME2) werden in dem Beispiel der Figur 5 statt der Werte der Signale ($xi_{i,j}(t)$) der Ausgangssignalmatrix ($XI_{i,j}$) der ersten Integrationseinheit (INT1) dem Schätzer zugeführt.

Wie leicht zu erkennen ist, sind alle die zuvor diskutierten bevorzugten Variationen und Ausführungen nur einzelne Beispiele der möglichen Ausführungen der erfindungsgemäßen Vorrichtungen. Diese haben zumindest als Teilstruktur die Grundstruktur der Figuren 1 und 2, die Drift-Field-Diode (DFD) und den zusätzlichen optionalen nicht-linearen Filter (NLF) und den optionalen Schätzer (EST) gemeinsam. Mehrere bevorzugte Sender (H), Kompensationssender (K) und Empfänger (D) werden im zitierten Stand der Technik bereits ausführlich behandelt und sind in ihren speziellen Ausformungen ebenso wie die Kombinationen der zuvor diskutierten Elemente Teil dieser Offenbarung. Dies gilt auch für die folgenden beispielhaft beschriebenen Ausführungen.

Ein Problem, das bisher nicht betrachtet wurde, ist die Steuerung des optionalen nicht-linearen Filters (NLF), wie in Fig. 7 gezeigt. Im einfachsten Fall besteht der nicht-lineare Filter (NLF) bevorzugt beispielsweise aus einer Schaltmatrix, bei dem bevorzugt ein Schaltelement ein Signal ($zi_{i,j}(t)$) auf der einen Seite mit einem korrespondierenden Ausgangssignal ($nf_{i,j}(t)$) auf der anderen Seite des nicht-linearen Filters (NLF) verbindet. Die Schaltelemente des nicht-linearen Filters (NLF) werden dabei bevorzugt durch einen Steuersignal-Bus (CTRS) kontrolliert. Dieser enthält in diesem einfachen Beispiel typischerweise für jedes der zuvor erwähnten Paare aus Signal ($zi_{i,j}(t)$) auf der einen Seite und einem korrespondierenden Ausgangssignal ($nf_{i,j}(t)$) ein Steuersignal. Wird die Funktion des nicht-linearen Filters (NLF) durch einen Signalprozessor vorgenommen, so entspricht die Funktion des nicht-linearen Filters (NLF) der Multiplikation des Eingangssignals ($zi_{i,j}(t)$) mit einer der Steuerung (CTRS) entsprechenden Matrix, die selbst wieder durch einen nicht-linearen Prozess aus den zuvor ermittelten Werten der Matrizen ($YI_{i,j}$, $YIn_{i,j}$, $XI_{i,j}$, $ZI_{i,j}$) abgeleitet werden kann. Die Matrix $YIn_{i,j}$ umfasst dabei die Ausgangssignale ($yi_{i,j}(t_n)$) der ersten Speichereinheit (ME1).

Ganz zu Beginn wurde erwähnt, dass beispielsweise das Maximum der Signale ($zi_{i,j}(t)$) der zweiten Speichereinheit (ME2) gesucht werden kann und genau dieses als Echo-Informationssignal ausgegeben wird. Das Suchen des Maximums ist nur ein bevorzugtes Beispiel für eine von vielen Ausführungsformen des Schätzers. Die Maximumsuche wird beispielsweise mittels des erfindungsgemäßen Schätzers (EST), also in einer Steuervorrichtung durchgeführt. Der Schätzer (EST) führt in der Regel Verfahren der statistischen Signaltheorie aus, um beispielsweise die Signale $yi_{i,j}(t)$, $yi_{i,j}(t_n)$, $xi_{i,j}(t)$, $zi_{i,j}(t)$ zu selektieren, die eine optimale Kompensation des Empfangssignals erlauben und eine Aussage zur Entfernung eines Objekts, einer Objekteigenschaft oder einer Eigenschaft der Übertragungsstrecke zu ermöglichen. Hier können auch neuronale Netzte, HMM-Erkenner (Hidden Markov Model), DTW-Erkenner (Dynamic-time-warping), Viterbi-Dekoder und Petri-Netze zum Einsatz kommen, die durch geeignete Vorrichtungen durchgeführt werden.

Somit ist der Schätzer EST ein bevorzugter Bestandteil der erfindungsgemäßen Vorrichtung das zugehörige Schätzverfahren als ein Teil und des erfindungsgemäßen Verfahrens, der sehr verschieden ausgeformt werden kann. Der bevorzugte Maximums-Schätzer und die darin verwirklichbare Maximumverfahren wurde bereits als eine mögliche Ausführungsform eines Schätzers und des Schätzverfahrens beschrieben.

Der Schätzer wird bevorzugt nicht nur mit dem Regelwert-Signal ($yi_{i,j}(t)$) der Regelwertmatrix ($YI_{i,j}$) oder einem weiterverarbeiteten Regelwert-Signal, beispielsweise dem Signal ($zi_{i,j}(t)$) der Matrix ($ZI_{i,j}$) beaufschlagt, sondern auch mit Werten aus einem Referenzspeicher (MRef), der vorher abgespeicherte Regelwert-Signale ($yi_{i,j}(t)$) und deren Weiterverarbeitungen ($yi_{i,j}(t_n)$, $xi_{i,j}(t)$, $zi_{i,j}(t)$) umfassen kann und in dem diese Signale ggf. abgespeichert sind. In der Regel und bevorzugt werden in dem Schätzer dann die aktuellen Regelwertsignale mit den als Referenz abgespeicherten Regelwert-Signalen in Beziehung gesetzt, so dass beispielsweise der Maximumwert bei Ausführung des Schätzers als Maximumschätzer ermittelt werden kann und als Echo-Informationssignal ausgegeben werden kann.

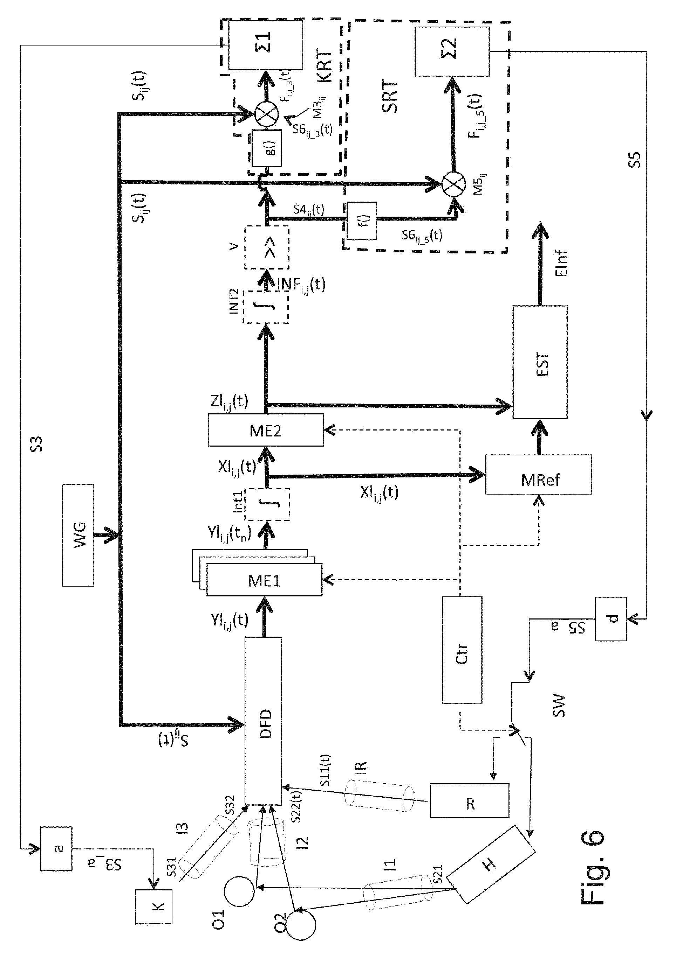

Anhand von Figur 6 wird nun erläutert, wie diese Referenzwerte gebildet werden.

Es ist nun denkbar, dass sich die Vorrichtung bevorzugt selbst vermisst, um eine Referenz zu bestimmen. Hierzu ist es beispielsweise denkbar, dass die Vorrichtung bevorzugt einen Referenzsender (R) umfasst, wie er beispielhaft in Figur 6 gezeigt ist. Der Referenzsender (R) strahlt bevorzugt über eine bekannte Referenzübertragungsstrecke (IR) überlagernd in den Empfänger (D, DFD) ein. Zur Selbstkalibration wird bevorzugt das unmittelbare Sendesignal (S5_a) vom Sender (H) auf den Referenzsender (R), beispielsweise durch einen Schalter (SW), umgeschaltet. Eine Ablaufsteuerung (Ctr) kontrolliert bevorzugt diesen Vorgang. Bevorzugt werden Werte der Signale, also bevorzugt die Signale ($yi_{i,j}(t)$, $yi_{i,j}(t_n)$, $xi_{i,j}(t)$, $zi_{i,j}(t)$) der entsprechenden Matrizen ($YI_{i,j}$, $YIn_i$, $XI_{i,j}$, $ZI_{i,j}$), in einem Referenzspeicher (MRef) zwischengespeichert. Der Schätzer (EST) kann nun bevorzugt diese zwischengespeicherten Referenzwerte verwenden, um beispielsweise den Untergrund durch Subtraktion und/oder Division zu eliminieren. Bevorzugt kann die Ablaufsteuerung (Ctr) zweckmäßiger Weise auch die Ansteuerung der anderen optionalen Speicher (ME1, ME2) steuern. Selbstverständlich kann der Referenzsender (R) auch ohne die oder einige der Komponenten (ME1, ME2, INT1, INT2, V, KRT, SRT), wie in den Figuren dargestellt, eingesetzt werden. Im weiteren Verlauf wird das Eliminieren des Untergrunds durch Division weiter unten erläutert werden.

Es wurde bereits erwähnt, dass bevorzugt ein System mit mehreren Wavelet-Generatoren denkbar ist. Ein spezielles System dieser Art umfasst zusätzlich einen nicht-linearen Filter (NLF) und Verzögerungsglieder. Dieses System kann bevorzugt dadurch erzielt werden, dass der optionale nicht-lineare Filter (NLF) über ein, zwei oder eben mehr zusätzliche Ausgangsbusse verfügt, die die Verzögerungseinheiten für die Verzögerung der Wavelet-Signale ($s_{i,j}(t)$) der Ausgangssignal-Matrix ($S_{i,j}$) des Wavelet-Generators (WG) steuern. In der Figur 7 ist ein solches bevorzugtes System beispielhaft dargestellt. Der nicht-lineare Filter (NLF) verfügt zusätzlich über einen ersten Verzögerungssteuerbus ($Dt_{i,j\_3}$) und einen zweiten Verzögerungssteuerbus ($Dt_{i,j\_5}$). Es ist beispielsweise denkbar, dass der nicht-lineare Filter (NLF) sich bevorzugt in drei einzelne nicht-lineare Teilfilter mit je einem dieser Ausgangsbusse als Ausgang aufteilt. Für den Fachmann ist es offensichtlich, dass die Verzögerungssteuersignale der Verzögerungssteuerbusse ($Dt_{i,j\_3}$) und ($Dt_{i,j\_5}$) ggf. integriert und verstärkt werden können. Dies ist in den Zeichnungen zur besseren Übersichtlichkeit nicht eingetragen. Der nicht-lineare Filter wird bevorzugt über einen Steuersignal-Bus (CTRS) von dem Schätzer gesteuert.

Die Verzögerung bzw. Phasenregelung der Wavelet-Signale ($s_{i,j}(t)$) der Ausgangssignal-Matrix ($S_{i,j}$) des Wavelet-Generators (WG) für die Erzeugung des Sendesignals (S5) wird in dem Beispiel bevorzugt in Abhängigkeit von dem zweiten Verzögerungssteuerbus (Dt$_{i,j\_5}$) durch die erste Verzögerungseinheit ($\Delta$t1) vorgenommen. Die somit verzögerten Wavelet-Signale (S$_{i,j\_5}$(t)) der Senderseite werden dann bevorzugt statt der Wavelet-Signale (s$_{i,j}$(t)) der Ausgangssignal-Matrix (S$_{i,j}$) des Wavelet-Generators (WG) der fünften Multipliziereinheit (M5$_{ij}$) zugeführt.

Die Verzögerung bzw. Phasenregelung der Wavelet-Signale (s$_{i,j}$(t)) der Ausgangssignal-Matrix (S$_{i,j}$) des Wavelet-Generators (WG) für die Erzeugung des Kompensatorspeisesignals (S3) wird in dem bevorzugten Beispiel analog in Abhängigkeit von dem ersten Verzögerungssteuerbus (Dt$_{i,j\_3}$) durch die zweite Verzögerungseinheit ($\Delta$t2) vorgenommen. Die somit verzögerten Basissignale (S$_{i,j\_3}$) der Kompensationssenderseite werden dann statt der Wavelet-Signale (s$_{i,j}$(t)) der Ausgangssignal-Matrix (S$_{i,j}$) des Wavelet-Generators (WG) der jeweiligen dritten Multipliziereinheit (M3$_{ij}$) zugeführt. Durch diese Konstruktion ist eine sehr feine Ausregelung des Regelkreises möglich.

Wie bereits erwähnt, zeigt Figur 7 beispielhaft mehrere mögliche bevorzugte Alternativen der Kompensationseinspeisung, die einzeln oder in Kombination verwendet werden können. Die gestrichelt gezeichneten Komponenten (INT1, INT2, V) sind optional. Zur Vereinfachung sind die Rücktransformationseinheiten (KRT und SRT) nicht genauer ausgeführt; hier wird auf die andere Figuren und die entsprechende Beschreibung verwiesen.

Neben der bereits besprochenen Kompensation über einen Kompensationssender K, der überlagernd in die Drift-Field-Diode DFD (Empfänger D) einstrahlt, ist es bevorzugt auch denkbar, das Kompensationssignal (S3) über einen zweiten Verstärker (b) für das Kompensatorspeisesignal (S3) in die Drift-Field-Diode DFD oder die Avalance-Diode AVD (Empfänger D) selbst einzuspeisen, wenn deren Empfindlichkeit über ein Signal geändert werden kann. Die Verstärkung des zweiten Verstärkers (b) für das Kompensatorspeisesignal (S3) kann eins sein. Der zweite Verstärker (b) für das Kompensatorspeisesignal (S3) kann über einen Offset verfügen.

Des Weiteren ist es möglich, bevorzugt das Kompensationssignal (S3) über einen dritten Verstärker (c) für das Kompensatorspeisesignal (S3) und einen Addierer A1 direkt in das Ausgangssignal des Empfängers (D) oder an eine andere Stelle in der Regelschleife einzuspeisen. Die Verstärkung des dritten Verstärkers (c) für das Kompensatorspeisesignal (S3)kann eins sein. Der Verstärker (c) für das Kompensatorspeisesignal (S3)kann über einen Offset verfügen.

Es ist natürlich in vielen Fällen sinnvoll, für jede oder einzelne der Rückkoppelmethoden bevorzugt eine separate Regelschleife mit einem separaten Kompensatorspeisesignal (S3) aufzubauen. Dies ist hier aus Gründen der Übersichtlichkeit nicht dargestellt.

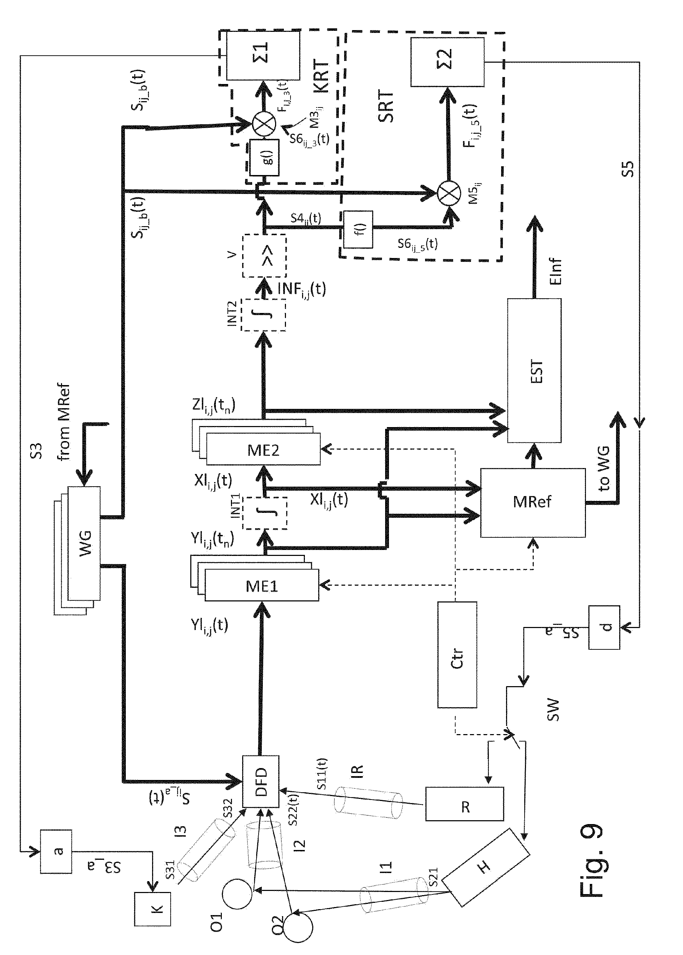

Figur 9 zeigt den beispielhaften Fall, dass das Sensorsystem über mehrere Wavelet-Generatoren (WG, WG_II) verfügt, die (teilweise oder alle) bevorzugt parametrisch durch den Schätzer und/oder die Referenzwerte, hier beispielsweise den Inhalt des Referenzspeichers (MRef), gesteuert werden. So ist es beispielsweise denkbar, dass Wavelet-Signale erzeugt werden, die besonders wenig gestört werden oder zwei dicht beieinander liegende Objekte gut trennen. Wenn der Schätzer nämlich die Bewegung zweier Objekte überwacht, so kann er bevorzugt die Bahn der Objekte extrapolieren und die Auflösung, sprich das Frequenzspektrum, der Wavelets so anpassen, dass sich beispielsweise eine maximale Auflösung zu Ungunsten einer weiträumigen Überwachung ergibt. Das Verfahren lässt sich somit ideal an de gewünschten Anforderungen anpassen.

Figur 10 zeigt einige beispielhafte Wavelet-Signale (s$_{i,j}$(t)). Die Wavelet-Signale (s$_{i,j}$(t)) können bevorzugt aus einem Ur-Wavelet-Signal (s$_{11}$(t)) durch zeitliche Verschiebung, zeitliche Streckung/Stauchung und Summierung/Subtraktion erzeugt werden. Für die Erfüllung der technischen Lehre ist es dabei unerheblich, ob eine solche zeitliche Verschiebung, zeitliche Streckung/Stauchung und Summierung/Subtraktion wirklich stattfindet oder ob die Signale direkt erzeugt werden. Wichtig ist in diesem Fall nur, dass zumindest ein Teil eines Signals als Ur-Wavelet-Signal (s$_{11}$(t)) definiert werden kann und wesentliche Teile der anderen Wavelet-Signale (s$_{i,j}$(t)) durch diese Operationen erzeugt werden können. Hinsichtlich der Theorie der Wavelets sei hier auf die einschlägige Literatur, beispielsweise Stephane Mallat, "A Wavelet Tour of Signal Processing" Academic Press London 1997 verwiesen.

Sinus- und Cosinus-Signale mit unterschiedlicher Phasenverschiebung und/oder unterschiedlicher Frequenz können dementsprechend aus einer einzigen Sinus-Welle oder -Halbwelle hergeleitet werden. Bevorzugt können einzelne Pulse daher für die Herleitung von Rechtecksignalen unterschiedlicher Frequenz verwendet werden. Die ist beispielhaft in Figur 11 gezeigt.

Es ist auch möglich, dass nicht vollständig korrelierende, ggf. auch bandbegrenzte Zufallssignale verwendet werden, die sich ausdrücklich nicht unbedingt aus Wavelets herleiten lassen. Es ist ja gerade ein Vorteil der erfindungsgemäßen Vorrichtung und/oder des erfindungsgemäßen Verfahrens, die Korrelationen gerade zulassen. Es ist besonders vorteilhaft, wenn diese Zufallssignale zusammen mit den besprochenen Verzögerungsgliedern $\Delta$t1 und $\Delta$t2 verwendet werden. Insofern werden dann bevorzugt alle oder ein Teil der Wavelet-Generatoren durch Zufallssignalgeneratoren ersetzt. Dies würde die Systemstruktur aber nicht grundsätzlich ändern.

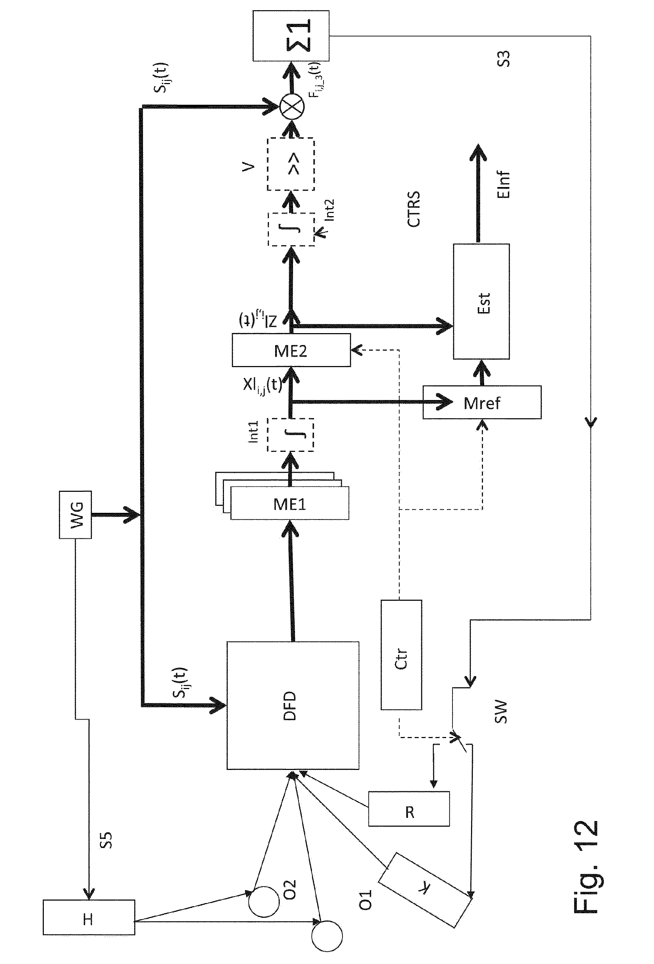

Figur 12 zeigt das Blockschaltbild eines bevorzugten Sensorsystem mit Drift-Field-Diode (DFD) als Empfänger (D). Dabei wird der Sender (H) geregelt und es erfolgt eine kontinuierliche Phasen- bzw. Verzögerungsregelung. Das System weist in der Regel einen bevorzugten hochverstärkenden PI-Regler auf. Das besondere hier ist, dass der Wavelet-Generator (WG) direkt das Sendesignal (S5) liefert.

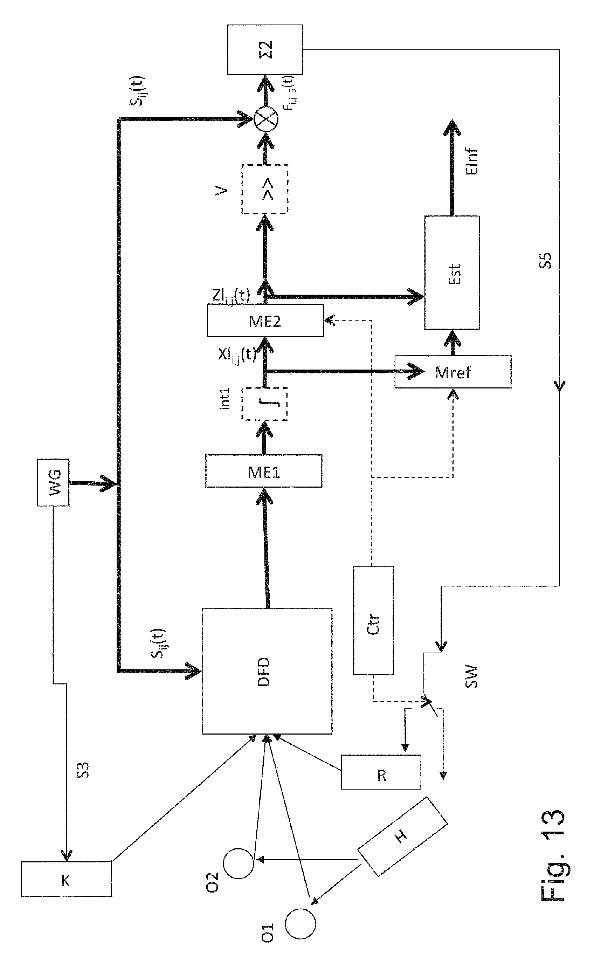

Figur 13 zeigt das Blockschaltbild einer bevorzugten Vorrichtung mit Drift-Field-Diode DFD und mit Senderregelung und mit Phasen- bzw. Verzögerungsanpassung durch Mischung orthogonaler Wavelet-Signale (s$_{i,j}$(t)) und mit einem hochverstärkendem PI-Regler. Das besondere hier ist, dass der Wavelet-Generator (WG) direkt das Kompensatorspeisesignal (S3) liefert.

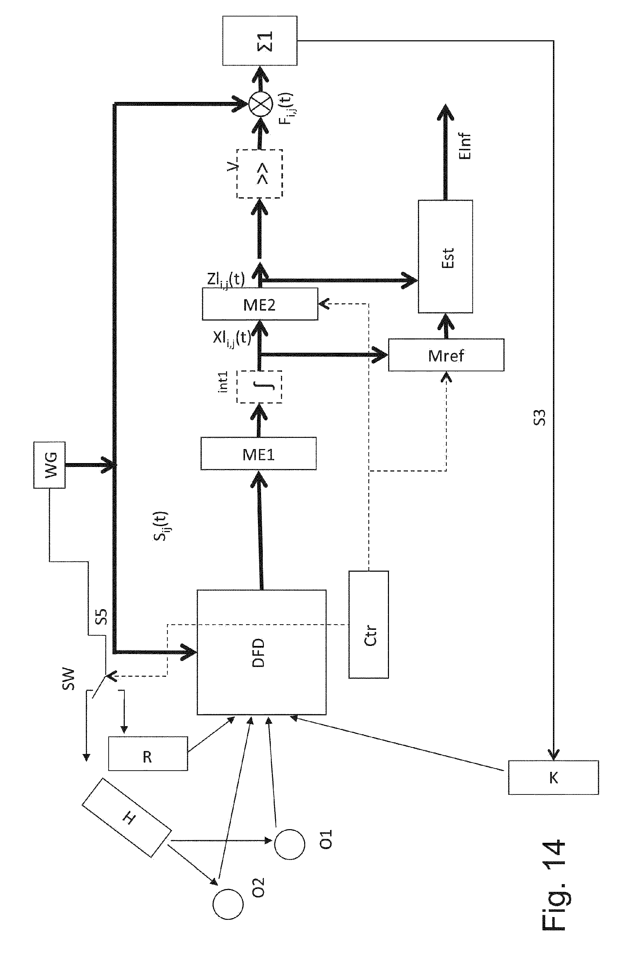

Figur 14 zeigt ein bevorzugtes System im Blockschaltbild mit Kompensationsregelung und hochverstärkendem PI-Regler. Das System kann mittels des Referenzsenders R, wie oben beschrieben, kalibriert werden. Die Kalibrierwerte werden bevorzugt im Speicher (MRef) abgelegt. Der Schätzer (EST) kann dann mit Hilfe dieser abgelegten Kalibrierwerte den Untergrund eliminieren.

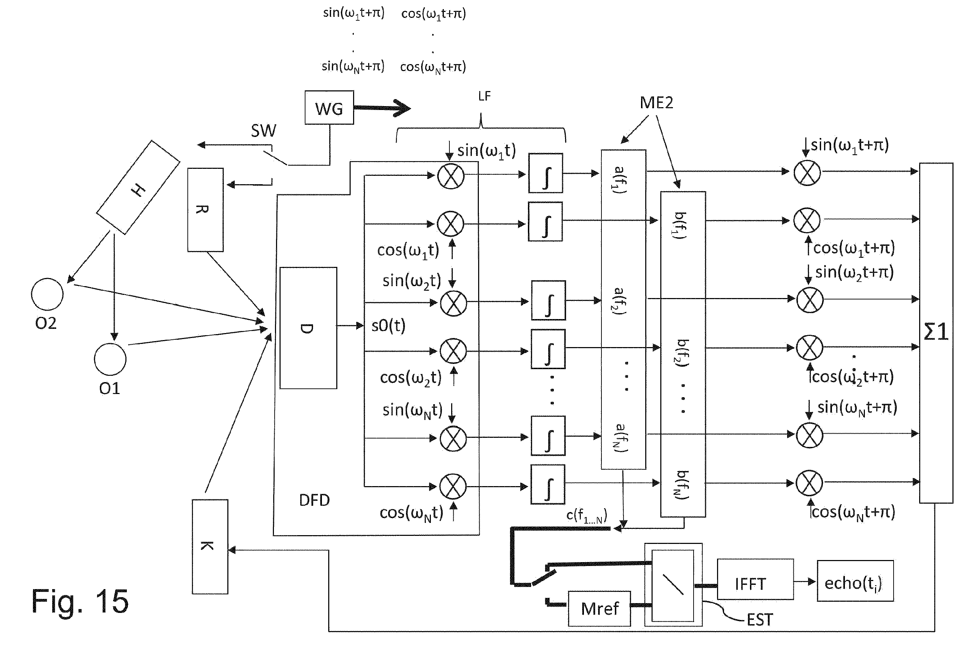

Figur 15 zeigt das Blockschaltbild der bevorzugten Vorrichtung unter Nutzung einer bevorzugten Ausgestaltung eines Frequenzbereichs-Verfahrens mit einem P-Regler ohne Verstärker. Die Wavelet-Signale ($s_{i,j}(t)$) sind bevorzugt so gewählt, dass sich Paare aus jeweils einer Sinus- und einer dazu orthogonalen Cosinus-Funktion jeweils einer Frequenz ergeben. Die Frequenzen dieser Paare unterscheiden sich jeweils voneinander. Im Gegensatz zum Stand der Technik ist eben keine Orthogonalität unter den Paaren gefordert. Die Frequenzen der Sinus- und Cosinus-Signale müssen daher im Gegensatz zum Stand der Technik keine ganzzahligen Vielfachen einer Grundfrequenz sein, was einer Orthogonalitätsforderung gleichkäme. Zwischen den jeweils zwei Mitgliedern dieser Paare, also dem jeweiligen Cosinus- und Sinus-Signal, besteht aufgrund dieser Definition allerdings Orthogonalität innerhalb des Paares. Es ist also durchaus möglich, dass zumindest eine Teilmenge der Wavelet-Basissignale ($s_{i,j}(t)$) orthogonal zueinander ist. Das System weist eine Drift-Field-Diode (DFD) als Empfänger (D) auf, in der ein Teil der Linearform (LF) der Verarbeitungseinheit integriert ist. Im gezeigten Beispiel sind bevorzugt die Multiplizierglieder integriert, mittels denen die jeweiligen Sinus- und Cosinus-Signale des Wavelet-Generators (WG) mit dem Ausgangssignal des Empfängerelements (D) der Drift-Field-Diode (DFD) multipliziert werden.

Die Selektion der für die Weiterverarbeitung geeigneten Fourier-Koeffizienten aus der Menge der insgesamt so ermittelten Fourier-Koeffizienten ($a(f_1)$ bis $a(f_N)$ und $b(f_1)$ bis $b(f_N)$) erfolgt bevorzugt später im Signalpfad. Dies kann in einer bevorzugten Ausführungsform auch durch den nicht-linearen Filter (NLF) erfolgen. Die Linearform (LF) ist bevorzugt eine Fourier-Koeffizientenbestimmung, die bevorzugt durch eine Multiplikation des Eingangssignals (S0(t)) (das bevorzugt dem Verarbeitungszwischensignal oder dem Empfängerausgangssignal entspricht) mit dem jeweiligen Sinus- oder Cosinus-Signal und anschließender Integration in der Linearform (LF) erfolgt. Der zweite Speicher (ME2) speichert zumindest einen Teil der Fourier-Koeffizienten ($a(f_1)$ bis $a(f_N)$ und $b(f_1)$ bis $b(f_N)$) geeignet ab.

Zunächst wird auch hier der Referenzsender R mit den Wavelet-Signalen ($s_{i,j}(t)$) angesteuert. Die Fourier-Koeffizienten werden in dem zweiten Speicher (ME2) gespeichert. Der Referenzspeicher (MRef) wird zum Abspeichern der so ermittelten Referenz-Fourier-Koeffizienten ($a(f_1)$ bis $a(f_N)$ und $b(f_1)$ bis $b(f_N)$) an den zweiten Speicher (ME2) angeschlossen. In einem nächsten Schritt wird der Schalter (SW) zur Auswahl der Sendequelle umgeschaltet, so dass der Sender (H) mit den Wavelet-Signalen ($s_{i,j}(t)$) aus dem Wavelet-Generator (WG) gespeist wird. Nun werden erneut die Fourier-Koeffizienten ($a(f_1)$ bis $a(f_N)$ und $b(f_1)$ bis $b(f_N)$) in dem zweiten Speicher (ME2) gespeichert.

Nach der Abspeicherung der Referenz-Fourier-Koeffizienten im Referenzspeicher (MRef) kann bevorzugt durch Quotientenbildung im Schätzer zwischen den Werten in dem Referenzspeicher (MRef) und den neu gemessenen Fourier-Koeffizienten ($a(f_1)$ bis $a(f_N)$ und $b(f_1)$ bis $b(f_N)$) ein neuer Satz Koeffizienten bestimmt werden. Diese Koeffizienten sind die Fourier-Koeffizienten einer Reflektion an einem Objekt (O).

Der Schätzer (EST) dividiert also bevorzugt jeden so ermittelten Fourier-Koeffizienten, und damit ein diskretes Spektrum, durch seinen korrespondierenden und zuvor im Referenzspeicher MRef abgelegten zugehörigen Koeffizienten, auch Kalibrationswert oder diskretes Referenzspektrum genannt. Durch eine anschließende inverse Fourier-Transformation (IFFT) in einer entsprechenden IFFT-Vorrichtung kann bevorzugt wieder ein zeitliches Echo-Signal ($echo(t_i)$) als Ergebnis dieser inversen FFT-Rücktransformation ermittelt werden, das ein Echo-Informationssignal (EInf) ist. In diesem Echo-Signal ($echo(t_i)$) wurde der Untergrund durch die beschriebene Division durch die Kalibrationswerte im Referenzspeicher (MRef) eliminiert. Hiernach kann die Echoentscheidung pegel- und/oder zeitabhängig erfolgen. Das bedeutet, dass beispielsweise ein Echo als vorliegend angenommen wird, wenn ein vorgegebener absoluter oder relativer Pegel beispielsweise zu einem vorbestimmten Zeitpunkt überschritten wird.

Ein solcher bevorzugter Echoentscheider mit Vorverarbeitung über das Spektrum arbeitet beispielsweise auf Basis des Wiener-Chintschin-Theorems. Das hier beschriebene System ist also in der Lage, Störer zuverlässig zu unterdrücken.

Die Rücktransformation erfolgt bevorzugt hinter dem nicht-linearen Filter (NLF) durch zumindest teilweise, vorzugsweise aber komplette Multiplikation der Fourier-Koeffizienten ($a(f_1)$ bis $a(f_N)$ und $b(f_1)$ bis $b(f_N)$), sofern diese durch den Filter durchgelassen werden, mit dem jeweiligen mit -1 multiplizierten Sinus-oder Cosinus-Signal bzw. mit dem um $\pi$ (Pi) verschobenen Sinus- oder Cosinus-Signal. Durch Summation der einzelnen Signalanteile in dem ersten Summierer ($\Sigma 1$) wird das Kompensatorspeisesignal (S3) gebildet und dem Kompensator (K) zugeführt.

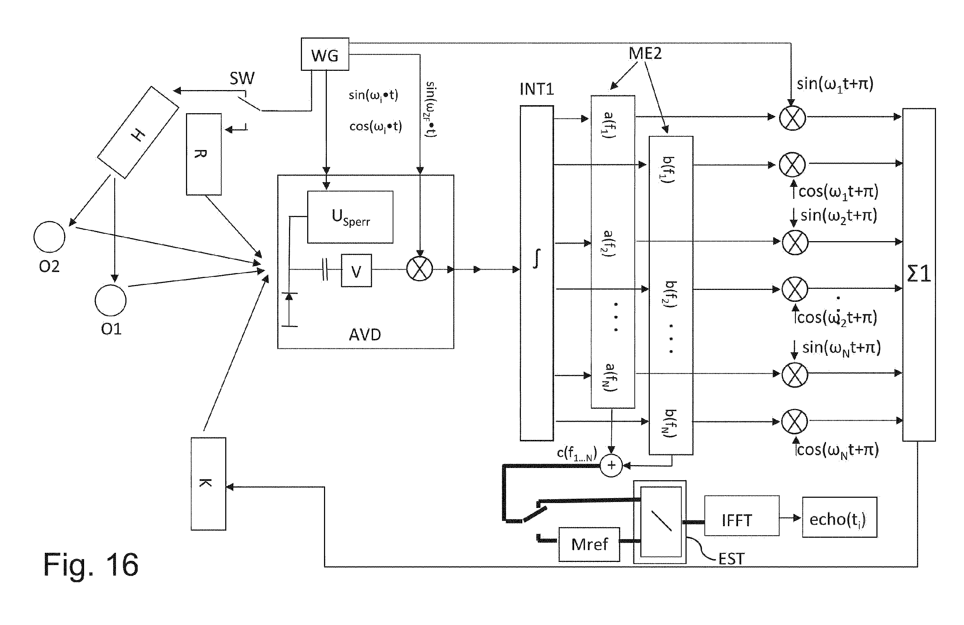

Die Figur 16 zeigt eine bevorzugte Ausführungsform des erfindungsgemäßen Sensorsystems mit einer Avalanche-Diode (AVD) anstelle der Drift-Field-Diode (DFD), wie in Figur 15 gezeigt. Die Avalanche-Diode (AVD) umfasst bevorzugt einen Fotoempfänger (Fotodiode), eine Kapazität, eine optionale Spannungsquelle $U_{Sperr}$, die bevorzugt von dem Wavelet-Generator WG mit entsprechenden Sinus- und Cosinus-Signalen als Wavelet-Signale gespeist wird, und einen optionalen Modulator, beispielsweise ein Multiplizierglied, mit dem ein Zwischenfrequenz-Signal, bevorzugt ein weiteres Wavelet-Signal des Wavelet-Generators (WG), hinzugemischt wird. Die Sperrspannung $U_{sperr}$ wird also bevorzugt mittels der Wavelet-Signale des Wavelet-Generators WG zumindest zeitweise auf eine vordefinierte Zwischenfrequenz der Avalanche-Diode (AVD) moduliert. Das Empfängereingangssignal der Photodiode (D) wird durch die modulierte Sperrspannung auf die Zwischenfrequenz der Avalanche-Diode (AVD) gewandelt. Das dermaßen frequenzverschobene Empfangssignal wird mittels eines integrierten Verstärkers (V) verstärkt und mit einem weiteren Wavelet-Signal des Wavelet-Generators (WG), dessen Frequenz die Zwischenfrequenz ist, multipliziert. Bevorzugt ist das Zwischenfrequenz-Signal ein Sinus-Signal.

Bevorzugt umfasst die Avalanche-Diode (AVD) keinen Integrator, der das gemischte Signal integriert. Die Integration am Ausgang der Avalanche-Diode (AVD) erfolgt derart, dass sich durch Änderung der Zwischenfrequenzen die einzelnen Fourier-Koeffizienten $a(f_i)$ und $b(f_i)$ erzeugen lassen. Mittels eines bevorzugten optionalen Tasters oder Schalters, der getaktet sein kann, werden für die Fourier-Koeffizienten ($a(f_i)$, $b(f_i)$) einzelne Signale ausgegeben, die dann mit dem Integrator (INT1) jeweils zu dem entsprechenden Fourier-Koeffizienten ($a(f_1)$ bis $a(f_N)$ und $b(f_1)$ bis $b(f_N)$) integriert werden. Die weitere Verarbeitung erfolgt bevorzugt beispielsweise analog zu der Ausführungsformen gemäß Figur 15.

Die Wavelet-Signale zur Steuerung der Sperrspannung $U_{sperr}$ sind hierbei ebenfalls Paare von Signalen, die aus einer Sinus- und einer dazu orthogonalen Cosinus-Funktion bestehen. Diese Signale werden bevorzugt auch verwendet, um das Kompensationsspeisesignal (S3) zu erzeugen. Dabei sind die entsprechenden Sinus- und Cosinus-Signale jedoch um $\pi$ verschoben bzw. mit -1 multipliziert.

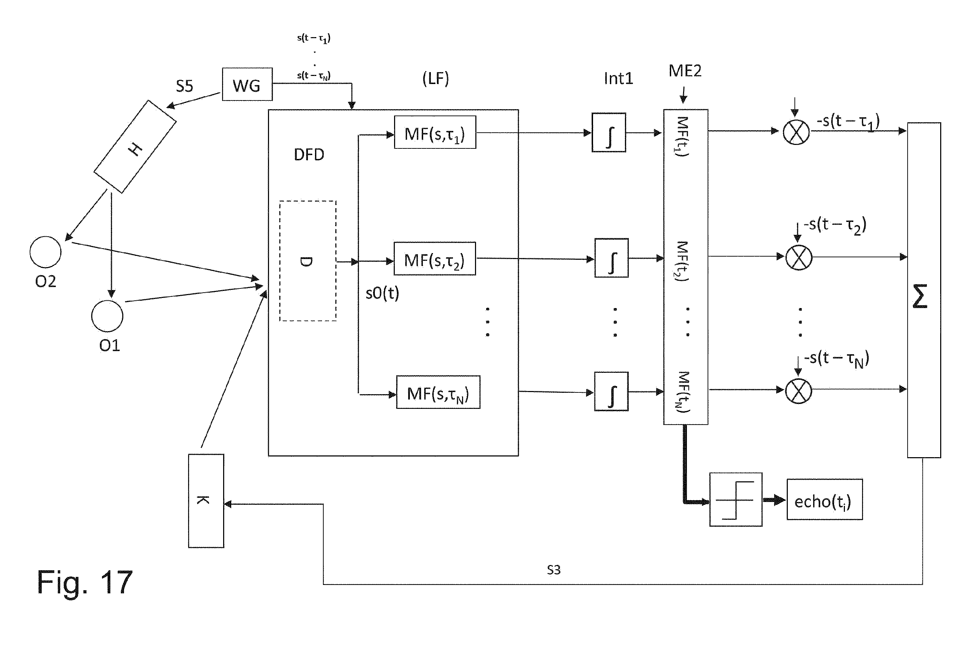

Figur 17 zeigt das schematische Blockschaltbild einer bevorzugten Gestaltung der erfindungsgemäßen Vorrichtung unter Verwendung des Zeitbereichsverfahrens. Der Wavelet-Generator (WG) erzeugt bevorzugt das Sendesignal (S5) und eine Reihe von N Wavelet-Signalen $s(t-\tau 1)$ bis $s(t-\tau N)$, die sich nur durch eine unterschiedliche Verzögerung unterscheiden. Vorzugsweise korrelieren die erzeugten N Wavelet-Signale $s(t-\tau 1)$ bis $s(t-\tau N)$ mit dem Sendesignal (S5) in der Art, dass sie eine zeitlich verschobene Version desselben darstellen. Gegebenenfalls können sie in der Amplitude modifiziert sein.

Die Linearform (LF) wird nun durch jeweils einen bevorzugten Matched-Filter ($MF(s,\tau_1)$ bis $MF(s,\tau_N)$) gebildet. Der jeweilige Matched-Filter ($MF(s,\tau_1)$ bis $MF(s,\tau_N)$) lässt jeweils den Signalanteil ungefiltert durch, der dem jeweils zugehörigen verzögerten Wavelet-Signal ($s(t-\tau_1)$ bis $s(t-\tau_N)$) entspricht. Alle anderen Signalanteile, die dem zugehörigen verzögerten Wavelet-Signal ($s(t-\tau_1)$ bis $s(t-\tau_N)$) nicht entsprechen, werden bevorzugt nicht durchgelassen oder zumindest stark gedämpft, dass sie bevorzugt ignoriert werden können. Der Pegel wird bevorzugt durch die nachfolgende Integration ermittelt, die noch Teil der Linearform (LF) ist. Mit den im zweiten Speicher (ME2) abgespeicherten Werten wird bevorzugt eine Einheitssprungfunktion multipliziert und durch eine zweite Bank aus Matched-Filtern gesendet. Die Summe der Ausgangssignale dieser zweiten Matched-Filter-Bank ergibt dann bevorzugt das gesuchte Echo-Signal ($echo(t_i)$). In diesem Beispiel ist der Untergrund allerdings nicht abgezogen.

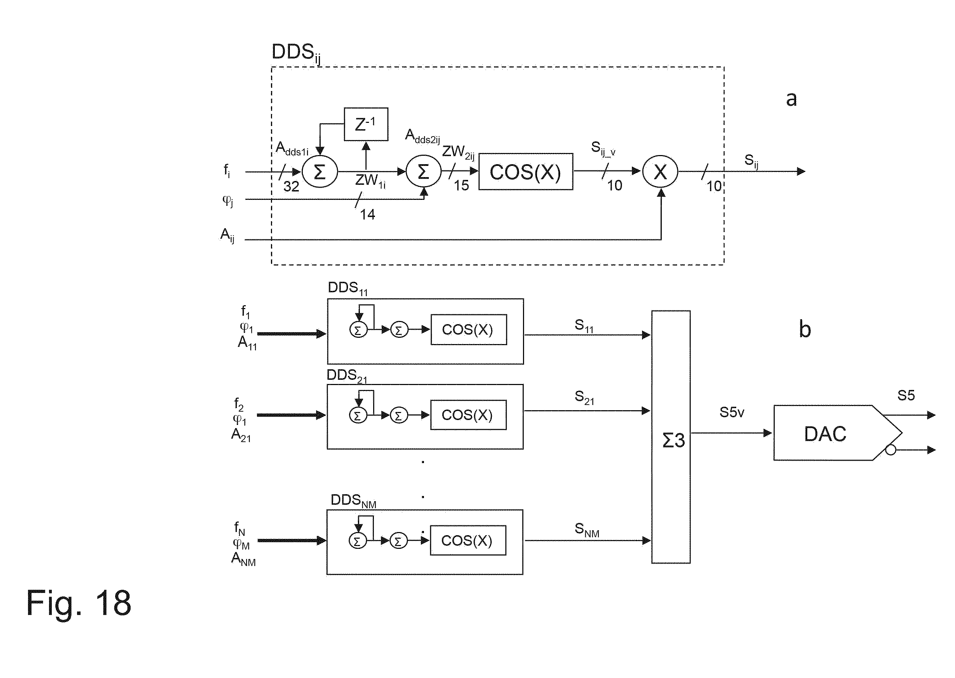

Die Figuren 18a und 18b zeigen ein bevorzugtes Beispiel eines Wavelet-Generators (WG). In Figur 18a ist ein sogenannter Direct-Digital-Sequenzer (DDS) im Detail dargestellt. Der i-te DDS-Block erhält als Vorgabe beispielsweise (und bevorzugt) eine 32-Bit-Zahl ($f_i$), die die zu erzeugende Frequenz für den Kanal i,j vorgibt. Des Weiteren erhält er bevorzugt einen Phasenoffset, beispielsweise und bevorzugt einen 14-Bit-Phasenoffset ($\varphi_j$), und eine Amplitudenvorgabe ($A_{i,j}$). Der vorgegebene Frequenzwert ($f_i$) wird nun kontinuierlich durch den ersten DDS-Addierer ($Adds_{1\_i}$) zu dem Zwischenwert ($ZW_{1\_i}$) hinzuaddiert. Je höher der vorgegebene Frequenzwert ($f_i$) ist, desto schneller kommt es zum Überlauf und damit zum Neustart. In diesem bevorzugten Beispiel wird zu den höchsten 14 Bit dieses Zwischenwertes ($ZW_{1\_i}$) kontinuierlich durch den zweiten DDS-Addierer ($Adds_{2\_i\_j}$) der 14-Bit-Phasenoffset $\varphi_j$ addiert.

Es ergibt sich der zweite Zwischenwert ($ZW_{2\_i,j}$). In diesem bevorzugten Beispiel ist dies ein 15-Bit-Wert. Dieser erzeugt mit Hilfe einer Look-Up-Table ($\cos(x)$) das Vor-Ausgangssignal ($s_{i,j\_v}(t)$), das mit der Amplitudenvorgabe ($A_{i,j}$) zum eigentlichen Ausgangssignal, dem Wavelet-Signal $s_{i,j}(t)$, multipliziert wird. Selbstverständlich kann auch eine andere Bit-Zahl und ein anderer Bit-Phasenoffset ($\varphi_j$) gewählt werden. Bevorzugt sind beide auf einander abgestimmt.

Der Vorteil dieses Verfahrens ist, dass das Ur-Wavelet - hier eine einzelne $\cos(t)$-Schwingung - in dem Look-Up-Table abgelegt werden kann. Wird dieses als Speicher ausgelegt, so können beliebige Wavelet-Sätze beispielsweise während des Betriebs erzeugt und ggf. durch Umprogrammierung des Speichers ausgetauscht werden.

Es ist von Vorteil und bevorzugt, wenn aus dem Look-Up-Table auch das Signal zum Zurücksetzen des Addierers ($Adds_{1\_i}$) gegeben wird. Erst durch dieses Zurücksetzen am Ende einer Periode kommt es zu einer echten Schwingung und periodischen Signalisierung.

Mehrere solche DDS-Blöcke werden bevorzugt durch einen Summierer ($\Sigma 3$) zu einem Signal (S5_v) zusammengefasst, aus dem durch Digital-zu-Analogwandlung DAC das Sendesignal (S5) erzeugt werden kann. Neben dieser beispielhaften Realisierung des Wavelet-Generators sind sehr viele andere Realisierungsmöglichkeiten gegeben, die weit über den Inhalt dieser Offenbarung hinausgehen würden.

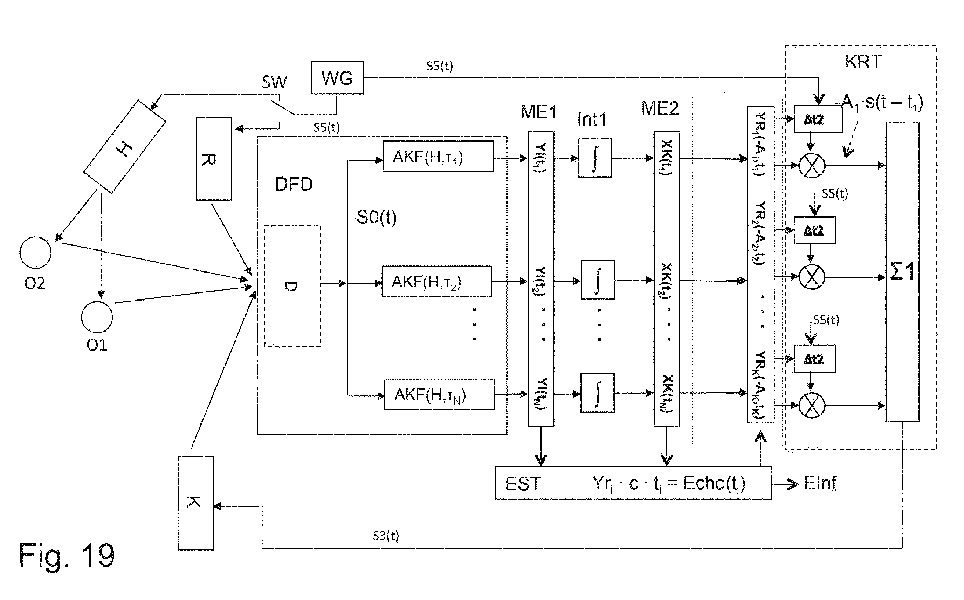

Figur 19 zeigt ein beispielhaftes bevorzugtes System mit Autokorrelationsfiltern $AKF(H, \tau_1)$ bis $AKF(H, \tau_N)$ als Linearform LF. Die Autokorrelationsfilter (AKF) sind in die Drift-Field-Diode (DFD) integriert, wie auch die Empfangsdiode (D), die nur gestrichelt gezeichnet ist. Der Schätzer (EST) berechnet bevorzugt aus den gespeicherten Regelwert-

Signalen ($y_i(t_1)$ bis $y_i(t_N)$) und dessen zwischengespeicherten integrierten Signalen $xk(t_1)$ bis $xk(t_N)$ das Echo-signal ($Echo(t_i)$). Dieses Signal wird in diesem Beispiel als Echo-Information EInf ausgegeben. Der Schätzer kann dabei beispielsweise einen Viterbi-Algorithmus mit einer angepassten Markov-Kette einsetzen, um die Bewegung von zuvor bereits erkannten Objekten zu berücksichtigen. Das gezeigte beispielhafte System gemäß Figur 19 verwendet das erfindungsgemäße Verfahren im Zeitbereich, wobei der Entscheider (Schätzer) die Echos auswertet. Bei diesem Verfahren wird die Laufzeit des Lichts für die Bestimmung des Abstands verwendet.

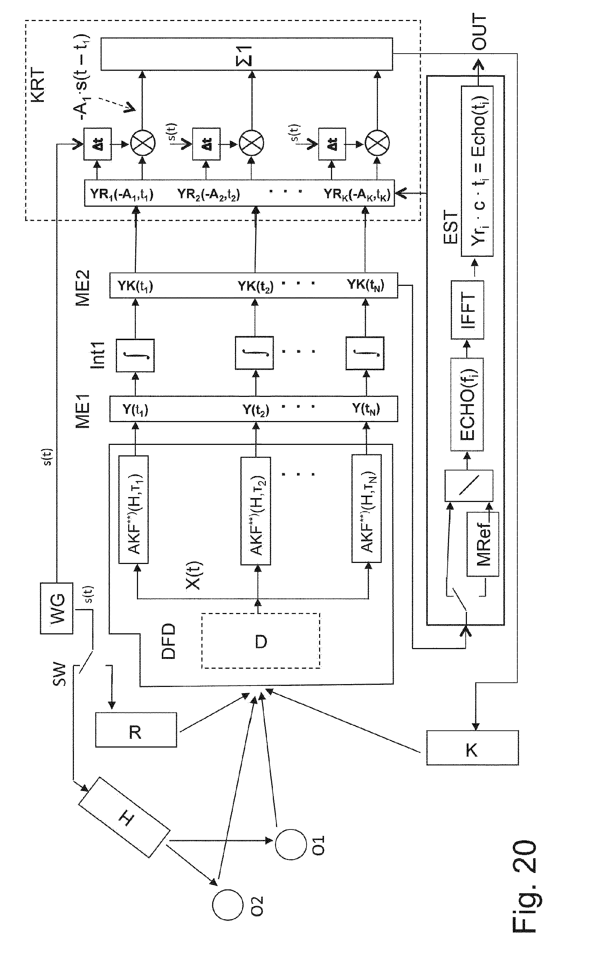

Figur 20 zeigt das System gemäß Figur 19, wobei bevorzugt unter Nutzung des Wiener-Chintschin-Theorems ein im Referenzspeicher (MRef) zwischengespeichertes Referenzspektrum aus dem Messspektrum eliminiert wird. Hierzu wird, wie oben bereits beschrieben, mittels des Referenzsenders (R) zunächst das Referenzspektrum ($YK(t_1)$ bis $YK(t_n)$) erzeugt und dann gemessen. Das gemessene Spektrum wird im Speicher (MRef) abgelegt. Danach wird der Referenzsender (R) abgeschaltet und mit dem Sender (H) ein Objekt (O) oder mehreren Messobjekte (O1 02) vermessen. Das neue Spektrum ($YK(t_1)$ bis $YK(t_n)$) wird bevorzugt durch die korrespondierenden Werte, die in dem Referenzspeicher (MRef) gespeichert sind, geteilt. Das sich ergebende Echo-Spektrum ($ECHO(f_i)$) wird bevorzugt durch eine inverse Fourier-Transformation (IFFT) in das Echosignal zurückgewandet. Hier können wieder nicht-lineare Schätzalgorithmen zur Bestimmung der Reflexions-Peaks eingesetzt werden. Diese können in einer besonderen Ausführungsform auch die Kompensationssignalerzeugung beispielsweise unter Zuhilfenahme des optionalen nicht-linearen Filters (NLF) steuern. In dem hier gezeigten Beispiel umfasst der Schätzer (EST) auch den Referenzspeicher (MRef). Er kann auch separat ausgeführt sein.

Die ermittelten Reflexionen, die den Entfernungen zum jeweiligen Objekt entsprechen, werden von dem Entscheider (Schätzer EST) als Ausgangssignal (OUT) ausgegeben. Dieses ist das Echo-Informationssignal (EInf).

Bezugszeichenliste

| a | Erster Verstärker für das Kompensatorspeisesignal |
|---|---|
| A | Beliebiges Signal für die Erläuterung der Linearform |
| $A_{i,j}$ | Amplitudenvorgabe im DDS |
| $Add_{1\_i}$ | Erster DDS Addierer |
| AVD | Avalanche-Diode (auch APD genannt) |
| b | Zweiter Verstärker für das Kompensatorspeisesignal |
| B | Beliebiges Signal für die Erläuterung der Linearform |
| c | Dritter Verstärker für das Kompensatorspeisesignal |
| CT | Halios Regler |
| CTRS | Steuersignal-Bus für den nicht-linearen Filter NLF |
| Ctr | Ablaufsteuerung |
| d | Speisesignalverstärker |
| D | Empfänger (Detektor) |
| D1 | Empfänger (Detektor) |
| DDS | Direct Digital Sequencer (DDS) = eine beispielhafte Struktur eines Wavelet-Generators (WG) |
| DFD | Drift-Field-Diode |
| $Dt_{i,j\_3}$ | erster Verzögerungssteuerbus |
| $Dt_{i,j\_5}$ | zweiter Verzögerungssteuerbus |
| $\Delta t1$ | Erste Verzögerungseinheit $\Delta t1$ für die Phasen- bzw. Verzögerungsregelung der Signalkomponenten des Sendesignals S5 |
| $\Delta t2$ | Zweite Verzögerungseinheit $\Delta t2$ für die Phasen- bzw. Verzögerungsregelung der Signalkomponenten des Kompensatorspeisesignals S3 |
| echo(t) | Echosignal (Zeitbereich) |
| EInf | Echo-Informationssignal |
| EST | Schätzer |

| | |
|---|---|
| $f_0$ | Grundfrequenz |
| f() | zweite Gewichtungsmatrix |
| $f_i$ | Frequenzvorgabe im DDS |
| $F_{i,j\_3}(t)$ | Rohkompensationssignal (in der Regel eine Signalmatrix.) |
| $F_{i,j\_5}(t)$ | Rohsendesignal (in der Regel eine Signalmatrix.) |
| g() | erste Gewichtungsmatrix |
| G1 | Signalgenerator wie im Stand der Technik beschrieben |
| H | Sender |
| H1 | Sender |
| I1 | Erste Übertragungsstrecke |
| I2 | Zweite Übertragungsstrecke |
| I3 | Dritte Übertragungsstrecke (Diese ist typischerweise in ihren Eigenschaften näherungsweise bekannt.) |
| INT1 | Erste Integratoreinheit aus einem oder mehreren Integratoren |
| INT2 | Zweite Integratoreinheit aus einem oder mehreren Integratoren |
| $\inf_{i,j}(t)$ | Integriertes Ausgangssignal $\inf_{i,j}(t)$ der zweiten Integratoreinheit INT2, Wert der Ausgangssignalmatrix $INF_{i,j}$ |
| $INF_{i,j}$ | integrierte Ausgangssignalmatrix $INF_{i,j}$ der zweiten Integratoreinheit INT2 |
| IR | Referenzübertragungsstrecke |
| K | Kompensationssender |
| LF | Linearform. Die Linearform verknüpft mindestens zwei Signale miteinander und ergibt mindestens ein Ausgangssignal. Bei den Signalen kann es sich auch um je eine Signal-Matrix handeln. Eine Linearform hat die Eigenschaft, dass die Multiplikation eines Eingangssignals mit einem Faktor a zu einer Multiplikation des oder der zugehörigen Ausgangssignale um den Faktor a führt. Die Verknüpfung der Summe zweier Signale mit einem dritten Signal mittels einer Linearform ist äquivalent zu der Summierung der Verknüpfungen jedes der beiden Signale vor der Addition mit dem dritten Signal mittels je einer gleichen Linearform und anschließender Addition. Typische Linearformen sind beispielsweise Skalar-Produkte, $L^2$-Normen, Faltungen, Autokorrelationsfilter, Matched-Filter etc. |
| LF(A,B) | Bezeichnet im Text die Verknüpfung zweier Signale A und B mittels einer Linearform. (siehe auch LF) |
| $M3_{ij}$ | Dritte Multipliziereinheit bestehend aus verschiedenen Multiplizierern |
| $M5_{ij}$ | Fünfte Multipliziereinheit bestehend aus verschiedenen Multiplizierern |
| ME1 | Erster Speicher zur Speicherung der Werte der Signale $yi_{i,j}(t)$ der Ausgangssignalmatrix $YI_{i,j}(t)$ der Linearform LF |
| ME2 | Zweiter Speicher zur Speicherung der Werte der Signale $xi_{i,j}(t)$ der Ausgangssignalmatrix $XI_{i,j}(t)$ der ersten Integrationseinheit Int1 |
| MRef | Referenzspeicher. |
| $M_{ref\_i,j}(t)$ | Ausgangssignalmatrix des Referenzspeichers MRef. |
| $NF_{i,j}$ | Ausgangssignalmatrix $NF_{i,j}$ des nicht-linearen Filters NLF. Dabei müssen nicht alle Signale $nf_{i,j}(t)$ der Ausgangssignalmatrix $NF_{i,j}$ tatsächlich vorhanden oder von Null verschieden sein. |
| $nf_{i,j}(t)$ | Signal $nf_{i,j}(t)$ der Ausgangssignalmatrix $NF_{i,j}$ des nicht-linearen Filters NLF. Nicht alle Signale $nf_{i,j}(t)$ müssen in der Ausgangssignalmatrix $NF_{i,j}$ tatsächlich vorhanden oder von Null verschieden sein. |
| O | Objekt in der Übertragungsstrecke, bevorzugt zwischen der Übertragungsstrecke I1 und der Übertragungsstrecke I2. Das Objekt O kann auch selbst eine Übertragungsstrecke sein. |

| O1 | Erstes Objekt in der Übertragungsstrecke. Das Objekt O1 kann auch selbst eine Übertragungsstrecke sein. |
|---|---|
| O2 | Zweites Objekt in der Übertragungsstrecke. Das Objekt 02 kann auch selbst eine Übertragungsstrecke sein. |
| P | Ur-Wavelet-Periode |
| Pa | Ur-Wavelet-Periode |
| PB | Ur-Wavelet-Periode |
| R | Referenzsender |
| $S_{-1}$ bis $S_3$ | Signalanteile des Signals s(t), wobei s(t) im Frequenzbereich als S(f) dargestellt ist. |
| S0(t) | Empfängerausgangssignal |
| $\varphi_i$ | Phasenvorgabe im DDS |
| S0e(t) | Der Signalanteil im Empfängerausgangssignal S0(t), der auf die Modifikation des Übertragungsstreckenausgangssignals S22(t) durch das Objekt oder die Objekte (O1 02...) zurückzuführen ist. Er korreliert daher mit dem entsprechenden Anteil (S22e(t)) im ersten Übertragungsstreckenausgangssignal S22(t). |
| S0r(t) | Referenzempfangssignal |
| S1(t) | Modifiziertes Empfängerausgangssignal |
| S1e(t) | Der Signalanteil im modifizierten Empfängerausgangssignal S1 (t), der auf die Modifikation des Übertragungsstreckenausgangssignals S22(t) durch das Objekt oder die Objekte (O1 02...) zurückzuführen ist. Er korreliert daher mit dem entsprechenden Anteil (S22e(t)) im ersten Übertragungsstreckenausgangssignal S22(t) und dem Anteil S0e(t) im Empfängerausgangssignal S0(t). |
| S3 | Kompensatorspeisesignal |
| S4 | Regelsignal (im Stand-der-Technik-Halios), dass als Ausgangssignal verwendet wird. Das Signal S4 stellt den Messwert des HALIOS Systems dar. |
| $S4_{i,j}$ | Ausgangssignalmatrix $S4_{i,j}$ der Verstärkereinheit V |
| $S4_{i,j}(t)$ | Ausgangssignal $S4_{i,j}(t)$ der Ausgangssignalmatrix $S4_{i,j}(t)$ der Verstärkereinheit V |
| S5 | Sendesignal |
| S5_a | Unmittelbares Sendesignal |
| $S6_{i,j\_3}(t)$ | Kompensationspegelmatrix |
| $S6_{i,j\_5}(t)$ | Sendepegelmatrix |
| S11 | Referenzsignal |
| S21 | Gesendetes Sendersignal |
| S22(t) | Erstes Übertragungsstreckenausgangssignal |
| S22e(t) | Der Signalanteil im ersten Übertragungsstreckenausgangssignal S22, der auf die Modifikation dieses Signals durch das Objekt oder die Objekte (O1 02...) zurückzuführen ist. |
| S31 | Gesendetes Kompensationssendersignal |
| S32 | Zweites Übertragungsstreckenausgangssignal |
| $S_{i,j}$ | Ausgangssignal-Matrix $S_{i,j}$ des Wavelet-Generators (WG) mit den Ausgangssignalen $s_{i,j}(t)$ |
| $s_{i,j}(t)$ | Ausgangssignal $s_{i,j}(t)$ der Ausgangssignal-Matrix $S_{i,j}$ des Wavelet-Generators (WG) |
| $s_{i,j\_a}(t)$ | Ausgangssignal $s_{i,j\_a}(t)$ des ersten Wavelet-Generators (WG_I) |
| $s_{i,j\_b}(t)$ | Ausgangssignal $s_{i,j\_b}(t)$ des zweiten Wavelet-Generators (WG_II) |

(fortgesetzt)

| | |
|---|---|
| $s_{i,j\_c}(t)$ | Ausgangssignal $s_{i,j\_c}(t)$ des dritten Wavelet-Generators (WG_III) |
| $s_{i,j\_v}(t)$ | Vorausgangssignal im DDS |
| $s_{i,j\_5}$ | verzögerten Basissignale $s_{i,j\_5}(t)$ der Senderseite |
| $s_{i,j\_3}$ | verzögerten Basissignale $s_{i,j\_3}(t)$ der Kompensationssenderseite |
| $S(f)$ | Signalbetragsspektrum. Das Signalbetragsspektrum ist der Betrag der Fouriertransformierten des Signals $S(t)$ |
| $S(t)$ | Allgemeines Signal, dass sich aus mehreren Harmonischen $S_{-1}$ bis $S_3$ zusammensetzt. Es handelt sich um ein Signal, das als beispielhaftes Empfängerausgangssignal S0(t) zu Anfang dieser Offenbarung diskutiert wird. |
| SW | Schalter zum Umschalten des unmittelbaren Sendesignals S5_a. |
| T | Periodenlänge / Zeitdauer |
| Ta | Periodenlänge / Zeitdauer |
| Tb | Periodenlänge / Zeitdauer |
| $\Sigma 1$ | Erster Summierer. Dieser berechnet das Kompensatorspeisesignal S3. |
| $\Sigma 2$ | Zweiter Summierer. Dieser berechnet das Sendesignal S5. |
| WG | Wavelet-Generator |
| WG_II, WG_III | Zweite bzw. dritter Wavelet-Generator |
| $XI_{i,j}$ | Ausgangssignalmatrix $XI_{i,j}$ der ersten Integrationseinheit INT1 |
| $xi_{i,j}(t)$ | integrierte Regelwert-Signale $xi_{i,j}(t)$ der Ausgangssignalmatrix $XI_{i,j}$ der ersten Integrationseinheit INT1 |
| $YI_{i,j}$ | Ausgangssignalmatrix $YI_{i,j}$ der Linearform LF |
| $YI_1$, $YI_{1\_i,j}$ | Erste Ausgangssignalmatrix $YI_{1\_i,j}$ der Linearform LF |
| $YI_2$, $YI_{2\_i,j}$ | Zweite Ausgangssignalmatrix $YI_{2\_i,j}$ der Linearform LF |
| $YI_3$, $YI_{3\_i,j}$ | Dritte Ausgangssignalmatrix $YI_{3\_i,j}$ der Linearform LF |
| $YI_4$, $YI_{4\_i,j}$ | Vierte Ausgangssignalmatrix $YI_{4\_i,j}$ der Linearform LF |
| $YI_5$, $YI_{5\_i,j}$ | Fünfte Ausgangssignalmatrix $YI_{5\_i,j}$ der Linearform LF |
| $YI_6$, $YI_{6\_i,j}$ | Sechste Ausgangssignalmatrix $YI_{6\_i,j}$ der Linearform LF |
| $yi_{i,j}(t)$ | Regelwert-Signale $yi_{i,j}(t)$ der Ausgangssignalmatrix $YI_{i,j}$ der Linearform LF |
| $yi_{1-i,j}(t)$ | Erste Regelwert-Signale $yi_{1\_i,j}(t)$ der ersten Ausgangssignalmatrix $YI_{1\_i,j}$ der Linearform LF, wobei diese durch Verknüpfung mittels der Linearform LF gebildet werden. |
| $yi_{2\_i,j}(t)$ | Zweite Regelwert-Signale $yi_{2\_i,j}(t)$ der ersten Ausgangssignal-matrix $YI_{2\_i,j}$ der Linearform LF, wobei diese in der Linearform LF durch Multiplikation gebildet werden. |
| $yi_{3\_i,j}(t)$ | Dritte Regelwert-Signale $yi_{3\_i,j}(t)$ der ersten Ausgangssignalmatrix $YI_{3\_i,j}$ der Linearform LF, wobei diese in der Linearform LF durch Multiplikation und anschließende Filterung und/oder Integration gebildet werden. |
| $yi_{4\_i,j}(t)$ | Vierte Regelwert-Signale $yi_{4\_i,j}(t)$ der ersten Ausgangssignal-matrix $YI_{4\_i,j}$ der Linearform LF, wobei diese in der Linearform LF durch Bildung eines Skalar-Produkts gebildet werden. |
| $yi_{5\_i,j}(t)$ | Fünfte Regelwert-Signale $yi_{5\_i,j}(t)$ der ersten Ausgangssignal-matrix $YI_{5\_i,j}$ der Linearform LF, wobei diese in der Linearform LF durch eine Korrelationsfilter gebildet werden. |
| $yi_{6\_i,j}(t)$ | Sechste Regelwert-Signale $yi_{6-i,j}(t)$ der ersten Ausgangssignal-matrix $YI_{6\_i,j}$ der Linearform LF, wobei diese in der Linearform LF durch ein Matched-Filter gebildet werden. |
| $YIn_{i,j}$ | Ausgangssignalmatrix $YIn_{i,j}$ mit den Regelwert-Signalen $yi_{i,j}(t_n)$ zum Zeitpunkt $t_n$ |

(fortgesetzt)

| | |
|---|---|
| $yi_{i,j}(t_n)$ | Regelwert-Signale $yi_{i,j}(t_n)$ der Ausgangssignalmatrix $YIn_{i,j}$ zum Zeitpunkt $t_n$ |
| $ZI_{i,j}$ | Ausgangssignalmatrix $ZI_{i,j}$ der zweiten Speichereinheit ME2 |
| $zi_{i,j}(t)$ | Regelwert-Signale $zi_{i,j}(t)$ der Ausgangssignalmatrix $ZI_{i,j}$ der zweiten Speichereinheit ME2 |
| $ZW_{1\_i}$ | Erster Zwischenwert im DDS |
| $ZW_{2\_i}$ | Zweiter Zwischenwert im DDS |

**Patentansprüche**

1. Sensorsystem zur Erkennung mindestens eines Objekts (O1 02) in einer Übertragungsstrecke (I), die eine erste Übertragungsstrecke (11) und eine zweite Übertragungsstrecke (12) einschließt, zwischen einem Sender (H) und einem Empfänger (D),
umfassend

- mindestens einen Sender (H) und mindestens einen Empfänger (D),
- wobei der Sender (H) mit einem Speisesignal (S5) angesteuert wird, um zumindest ein bekanntes Sendesignal (S21) des Senders (H) in die Übertragungsstrecke (I) hinein zu senden, das nach Durchgang durch mindestens einen Teil der Übertragungsstrecke (I) und Beeinflussung durch mindestens ein Objekt (O1 02) als modifiziertes Sendesignal zumindest zu einem Empfänger (D) gelangt und
- wobei der Empfänger (D) zumindest das von dem Sender (H) ausgesandte und durch mindestens ein Objekt (O1 02) modifizierte Sendesignal (S21) als modifiziertes Empfangssignal (S22) empfängt und daraus zumindest ein Empfängerausgangssignal (S0) mit wenigstens einem modifizierten Empfängerausgangssignalanteil (S0e) bildet,
- eine Verarbeitungseinheit (LF), die eine Linearform umfasst, um ein das Empfängerausgangssignal (S0) umfassendes Verarbeitungszwischensignal weiterzuverarbeiten und um mindestens einen modifizierten Empfängerausgangssignalanteil (S0e) zu separieren und daraus zumindest eine Regelwert-Matrix ($YI_{i,j}$) mit Regelwert-Signalen ($yi_{i,j}(t)$) zu erzeugen, wobei mindestens eines der Regelwert-Signale ($yi_{i,j}(t)$) von Null verschieden ist,
- eine Signal-Erzeugungs-Einheit, die wenigstens ein Basissignal erzeugt, das zu wenigstens einem Speisesignal (S5) oder wenigstens einem Kompensationsspeisesignal (S3) weiterverarbeitet wird,
- eine Rücktransformations-Einheit, die aus zumindest einem Teil der Regelwert-Signale ($yi_{i,j}(t)$) eine Senderücktransformation (SRT) durchführt und das Speisesignal (S5) erzeugt und/oder eine Kompensationsrücktransformation (KRT) durchführt und das Kompensationsspeisesignal (S3) erzeugt,

wobei

- eine Rückführung des Kompensationsspeisesignals (S3) in das Sensorsystem (1) hinein erfolgt,
- das Sensorsystem stabil ausgeregelt ist, und
- mindestens ein Regelwert-Signal ($yi_{i,j}(t)$) oder ein daraus abgeleitetes Signal ($xi_{i,j}(t)$, $zi_{i,j}(t)$, $nf_{i,j}(t)$, $inf_{i,j}(t)$, $S4_{i,j}(t)$, $S6_{i,j\_3}(t)$, $S6_{i,j\_5}(t)$) und/oder ein aus diesen Signalen abgeleitetes Signal ein Maß für die Eigenschaft oder den Abstand eines Objekts oder die Eigenschaft der Übertragungsstrecke (I, I1, 12) ist,
- die Signal-Erzeugungs-Einheit einen Wavelet-Generator (WG) umfasst, der wenigstens zwei Wavelet-Signale ($s_{i,j}(t)$) als Basissignale erzeugt, wobei diese zwei Wavelet-Signale ($s_{i,j}(t)$) bezüglich der Linearform (LF) ein orthogonales Paar von Signalen bilden, und
- der Empfänger (D) eine Avalanche-Diode (AVD) ist, deren Empfängerausgangssignal (S0) durch Modulation der Sperrspannung mit einer vorbestimmten Modulationsfrequenz auf eine vorbestimmte Zwischenfrequenz gewandelt wird, oder eine Drift-Field-Diode (DFD) ist, in der ein Element der Verarbeitungseinheit (LF) integriert ist.

2. Sensorsystem nach Anspruch 1, **dadurch gekennzeichnet, dass**

- die Zwischenfrequenz auf Basis des Speisesignals (S5) und der Modulationsfrequenz ermittelt wird, und
- die Wavelet-Signale ($s_{i,j}(t)$) auf die Zwischenfrequenz abgestimmt sind.

3. Sensorsystem nach Anspruch 1, **dadurch gekennzeichnet, dass** in der Drift-Field-Diode (DFD) ein Element der Verarbeitungseinheit (LF), insbesondere eine Multiplikation, als Teil der Linearform der Verarbeitungseinheit (LF) integriert ist.

4. Sensorsystem nach einem der vorhergehenden Ansprüche, **gekennzeichnet durch** einen Schätzer (EST) zur Selektion wenigstens eines der Regelwert-Signale ($yi_{i,j}(t)$) und zur Ermittlung eines Echosignals (echo(t)) eines Objekts (O) in der Übertragungsstrecke (I), aus dem die Bestimmung der Entfernung des Objekts (O) zu dem Sensorsystem und/oder der Reflexionseigenschaften eines Objekts (O) und/oder der Transmissionseigenschaften der Übertragungsstrecke (I) erfolgen kann.

5. Sensorsystem nach einem der vorhergehenden Ansprüche, **dadurch gekennzeichnet, dass** das Paar der vom Wavelet-Generator erzeugten Wavelets ($s_{i,j}(t)$) aus einer Sinus-Funktion und einer dazu orthogonalen Cosinus-Funktion besteht.

6. Sensorsystem nach einem der vorhergehenden Ansprüche, **dadurch gekennzeichnet, dass**

- mittels der Linearform (LF) Fourier-Koeffizienten gebildet werden, bevorzugt durch Multiplikation des Verarbeitungszwischensignals mit dem jeweiligen Wavelet-Signal, besonders bevorzugt einer Sinus-oder Cosinus-Funktion und anschließender Integration,
- in dem Schätzer (EST) eine Quotientenbildung von Referenz-Fourier-Koeffizienten, die mittels eines Referenzsenders (R) und der Linearform erzeugt wurden, und ermittelten Fourier-Koeffizienten erfolgt, und
- in einer IFFT-Einheit (IFFT) ein Echosignal (echo(t)) mittels einer inversen Fourier-Transformation gebildet wird.

7. Sensorsystem nach einem der vorhergehenden Ansprüche, **gekennzeichnet durch** einen Filter, der zumindest einen Teil der Regelwert-Signale ($yi_{i,j}(t)$) zu Filter-Ausgangssignalen umwandelt, wobei der Filter **durch** den Schätzer (EST) gesteuert wird.

8. Sensorsystem nach dem vorhergehenden Anspruch, **dadurch gekennzeichnet, dass** der Filter ein nicht-linearer Filter (NLF) ist und durch den Schätzer (EST) gesteuert wird.

9. Sensorsystem nach einem der vorhergehenden Ansprüche, **dadurch gekennzeichnet, dass** zur Rückführung des Kompensationsspeisesignals (S3)

- das Kompensationsspeisesignal (S3) mit einer ersten Kompensationsfilterfunktion (a(S3)) verstärkt und/oder gefiltert wird und als erstes Kompensatorsignal (S3_a) über einen Kompensationssender (K) und eine dritte Übertragungsstrecke (13) summierend oder multiplizierend überlagernd zum Empfänger (D) gelangt, und /oder
- das Kompensationsspeisesignal (S3) mit einer zweiten Kompensationsfilterfunktion (b(S3)) verstärkt und/oder gefiltert wird und als zweites Kompensatorsignal (S3_b) summierend oder multiplizierend überlagernd direkt in den Empfänger (D) hinein geleitet wird, und/oder
- das Kompensationsspeisesignal (S3) mit einer dritten Kompensationsfilterfunktion (c(S3)) verstärkt und/oder gefiltert wird und als drittes Kompensatorsignal (S3_c) summierend in einem Addierer (A1) mit dem Empfängerausgangssignal (S0) zum kompensierten Empfängerausgangssignal (S1) verarbeitet wird,

und

- das Verarbeitungszwischensignal aus dem Empfängerausgangssignal (S0) oder dem kompensierten Empfängerausgangssignal (S1) gebildet wird.

10. Sensorsystem nach einem der vorangehenden Ansprüche, **dadurch gekennzeichnet, dass** wenigstens ein Wavelet-Signal ($s_{i,j}(t)$) als Basissignal erzeugt wird, wobei bevorzugt das Speisesignal (S5) durch gewichtete oder ungewichtete Summierung aus den Wavelet-Signalen ($s_{i,j}(t)$) gebildet wird, und wobei bevorzugt wenigstens ein Teil der Wavelet-Signale ($s_{i,j}(t)$) durch zeitliche Verschiebung, zeitliche Stauchung und/oder zeitliche Streckung aus einem oder mehreren Ur-Wavelet-Signalen ($s_{1,1}(t)$) gebildet werden.

11. Sensorsystem nach einem der vorhergehenden Ansprüche, **dadurch gekennzeichnet, dass** die zwei Wavelet-Signale ($s_{i,j}(t)$, $s_{i,j}(t)'$), die ein Paar von Signalen bilden, die folgenden Bedingungen erfüllen:

das eine Wavelet-Signal ($s_{i,j}(t)$) ist aus mindestens einem Ur-Wavelet-Signal ($s_{1,1}(t)$) gebildet,

das andere Signal ($s_{i,j}(t)'$) ist aus mindestens einem Ur-Wavelet-Signal ($s_{1,1}(t)'$) gebildet,
die Integration der Ur-Wavelet-Signale ($s_{1,1}(t)$) und ($s_{1,1}(t)'$) über eine Ur-Wavelet-Periode P ist jeweils gleich Null für jedes der Ur-Wavelet-Signale ($s_{1,1}(t)$, $s_{1,1}'(t)$),
die Ur-Wavelet-Signale ($s_{1,1}(t)$, $s_{1,1}(t)'$) mit einer Periodendauer T sind bezüglich eines Symmetriepunktes T/2 symmetrisch, wobei gilt: $s_{1,1}(t-T/2) = (-1)*s_{1,1}(-t-T/2)$ und $s_{1,1}(t-T/2)' = (-1)*s_{1,1}(-t-T/2)'$, und
für die beiden Ur-Wavelet-Signale ($s_{1,1}(t)$, $s_{1,1}(t)'$) gilt: $s_{1,1}(t) = s_{1,1}(t+T/4)'$, für $0 <= t <= T/2$

**12.** Sensorsystem nach einem der vorhergehenden Ansprüche, **dadurch gekennzeichnet, dass** die Verarbeitungseinheit (LF) das Verarbeitungszwischensignal mit jeweils einem der Wavelet-Signale ($s_{i,j}(t)$, $s_{i,j\_a}(t)$, $s_{i,j\_b}(t)$) verknüpft, wobei das Ergebnis dieser n x m Verknüpfungen die Regelwert-Matrix ($YI_{i,j}$) in Form der ersten Regelwert-Signale ($yi_{i,j}(t)$) ist und
wobei die Verknüpfungen mit Hilfe jeweils

1. einer stets gleichartigen Linearform und/oder
2. einer Multiplikation und/oder
3. einer Multiplikation gefolgt von einer Filterung oder Integration und/oder
4. eines stets gleichartigen Skalar-Produkts und/oder
5. eines stets gleichartigen Korrelationsfilters

erfolgt und wobei

- nicht jede der n x m Verknüpfungen erfolgen oder ausgeführt werden bzw. jeder der Korrelationsfilter vorhanden sein muss und
- einzelne der n x m Regelwert-Signale ($yi_{i,j}(t)$) zu Null gesetzt oder weggelassen werden können.

**13.** Sensorsystem nach einem der vorhergehenden Ansprüche, **gekennzeichnet durch** einen linearen oder einen nicht-linearen Filter (NLF), der zumindest einen Teil dieser Regelwert-Signale ($yi_{i,j}(t)$) zu NLF-Ausgangssignalen ($nf_{i,j}(t)$) umwandelt, wobei die Rücktransformations-Einheit aus zumindest einem Teil der NLF-Ausgangssignale ($nf_{i,j}(t)$) die Senderücktransformation (SRT) durchführt.

**14.** Sensorsystem nach einem der vorhergehenden Ansprüche, **dadurch gekennzeichnet, dass**
in der Senderücktransformation (SRT)

- ein Multiplikator ($M5_{ij}$) wenigstens ein mit einer ersten Filterfunktion (f()) gefiltertes Eingangssignal ($S4_{i,j}(t)$) mit mindestens einem zugeordneten Wavelet-Signal ($s_{i,j}(t)$, $s_{i,j\_b}(t)$), das verzögert sein kann, zu einem Sendevorsignal ($F_{i,j\_5}(t)$) multipliziert
und
- ein Summierer ($\Sigma2$) aus allen Sendevorsignalen ($F_{i,j\_5}(t)$) durch Summierung das Speisesignal (S5) erzeugt, wobei die Filterfunktion (f()) eine Konstante sein kann und nicht alle Sendevorsignale ($F_{i,j\_5}(t)$) gebildet werden müssen

und/oder
in der Kompensatorrücktransformation (KRT)

- in einer Multipliziereinheit ($M3_{ij}$) wenigstens ein mit einer zweiten Filterfunktion (g()) gefiltertes Eingangssignal ($S4_{i,j}(t)$) mit mindestens einem zugeordneten Wavelet ($s_{i,j}(t)$, $s_{i,j\_b}(t)$), das verzögert sein kann, zu einem Kompensationsvorsignal ($F_{i,j\_3}(t)$) multipliziert
und
- ein Summierer ($\Sigma1$) aus allen Kompensationsvorsignalen ($F_{i,j\_3}(t)$) durch Summierung ein Kompensationsspeisesignal (S3) erzeugt, wobei die Filterfunktion (g()) eine Konstante sein kann und nicht alle Kompensationsvorsignale ($F_{i,j\_3}(t)$) gebildet werden müssen.

**15.** Sensorsystem nach einem oder mehreren der vorhergehenden Ansprüche, **gekennzeichnet durch** einen Referenzsender (R), der mit dem Speisesignal (S5) gespeist wird und zumindest zeitweise ein Referenzsignal (S11(t)) direkt zu dem Empfänger (D, DFD) sendet, das am Empfänger (D, DFD) als Referenzempfangssignal (S0r(t)) empfangen und in der Verarbeitungseinheit (LF) weiterverarbeitet wird,
wobei

- bevorzugt in einem Referenzspeicher (MRef)

   i. mindestens ein Regelwert-Signal ($yi_{i,j}$) der Regelwert-Matrix ($YI_{i,j}$) und/oder
   ii. mindestens eines der gespeicherten Regelwert-Signale ($yi_{i,j}(t_n)$) der Ausgangssignalmatrix ($YIn_{i,j}$) zum Zeitpunkt $t_n$ und/oder
   iii. mindestens eines der integrierten Regelwert-Signale ($xi_{i,j}(t)$) der Ausgangssignalmatrix ($XI_{i,j}$) der ersten Integrationseinheit (INT1) und/oder
   iv. mindestens eines der Regelwert-Signale ($zi_{i,j}(t)$) der Ausgangssignalmatrix ($ZI_{i,j}$) der zweiten Speichereinheit (ME2) und/oder
   v. mindestens eines der Signale ($nf_{i,j}(t)$) der Ausgangssignalmatrix ($NF_{i,j}$) des nicht-linearen Filters (NLF) und/oder
   vi. mindestens ein integriertes Ausgangssignal ($inf_{i,j}(t)$) der Ausgangssignalmatrix ($INF_{i,j}$) der zweiten Integratoreinheit (INT2) und/oder
   vii. mindestens ein Ausgangssignal ($S4_{i,j}(t)$) der Ausgangssignalmatrix ($S4_{ij}$) der Verstärkereinheit (V) und/oder
   viii. ein aus diesen Signalen abgeleitetes Signal als Referenzinformation abgelegt wird, und

- besonders bevorzugt mindestens eines der Regelwert-Signale ($yi_{i,j}(t)$) in einer zeitlichen Tiefe von mehr als einem Wert speichert.

**16.** Sensorsystem nach einem der vorhergehenden Ansprüche, **dadurch gekennzeichnet, dass**

   a. mindestens eines der Regelwert-Signale ($yi_{i,j}(t)$) der Regelwert-Matrix ($YI_{i,j}$) und/oder
   b. mindestens eines der gespeicherten Regelwert-Signale ($yi_{i,j}(t_n)$) der Ausgangssignalmatrix ($YIn_{i,j}$) zum Zeitpunkt $t_n$ und/oder
   c. mindestens eines der integrierten Regelwert-Signale ($xi_{i,j}(t)$) der Ausgangssignalmatrix ($XI_{i,j}$) der ersten Integrationseinheit (INT1) und/oder
   d. mindestens eines der Regelwert-Signale ($zi_{i,j}(t)$) der Ausgangssignalmatrix ($ZI_{i,j}$) der zweiten Speichereinheit (ME2) und/oder
   e. mindestens eines der Signale ($nf_{i,j}(t)$) der Ausgangssignalmatrix ($NF_{i,j}$) des nicht-linearen Filters (NLF) und/oder
   f. mindestens ein integriertes Ausgangssignal ($inf_{i,j}(t)$) der Ausgangssignalmatrix ($INF_{i,j}$) der zweiten Integratoreinheit (INT2) und/oder
   g. mindestens ein Ausgangssignal ($S4_{i,j}(t)$) der Ausgangssignal-matrix ($S4_{i,j}$) der Verstärkereinheit (V) und/oder
   h. ein aus diesen Signalen abgeleitetes Signal

in einer Echo-Auswerteeinheit derart weiterverarbeitet wird, dass die Echoanteile (EInf) des Empfangssignals (S22) oder ein Echo-Zeitsignal (echo(t)) bestimmt werden, wobei bevorzugt das Echo-Zeitsignal (echo(t)) ausgegeben oder weiterverarbeitet wird, um daraus die Entfernung zu einem Objekt zu bestimmen oder um auf das Vorhandensein weiterer Objekte zu schließen, deren Entfernung nicht bestimmt wird.

Fig. 1

Fig. 2

a)

S(f)

$S_{-1}$ $S_0$ $S_1$ $S_2$ $S_3$

$-f_0$ 0 $f_0$ $2*f_0$ $3*f_0$ f

b)

A(f)

$A_1$

$f_0$ f

c)

$S_1(f)<A(f)*S(f)>=S_1(f)$

$S_1$

$f_0$ f

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

EP 2 924 460 A1

Fig. 19

Fig. 20

**Europäisches Patentamt**

**European Patent Office**

**Office européen des brevets**

## EUROPÄISCHER RECHERCHENBERICHT

Nummer der Anmeldung

EP 14 16 1559

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 631 674 A1 (ELMOS SEMICONDUCTOR AG [DE]) 28. August 2013 (2013-08-28) * das ganze Dokument * ----- | 1-16 | INV. G01S17/10 G01S17/46 G01N21/17 G01S7/487 G01S7/497 |
| X | US 3 734 631 A (JUSTICE G ET AL) 22. Mai 1973 (1973-05-22) * das ganze Dokument * ----- | 1-16 | |
| X | WO 2008/092611 A1 (REIME GERD [DE]) 7. August 2008 (2008-08-07) * das ganze Dokument * ----- | 1-16 | |

| RECHERCHIERTE SACHGEBIETE (IPC) |
|---|
| G01S G01N |

Der vorliegende Recherchenbericht wurde für alle Patentansprüche erstellt

| Recherchenort | Abschlußdatum der Recherche | Prüfer |
|---|---|---|
| München | 5. September 2014 | Damp, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 1559

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2014

| Im Recherchenbericht angeführtes Patentdokument | | Datum der Veröffentlichung | Mitglied(er) der Patentfamilie | | Datum der Veröffentlichung |
|---|---|---|---|---|---|
| EP 2631674 | A1 | 28-08-2013 | DE 102012015423 | A1 | 29-08-2013 |
| | | | DE 102012015442 | A1 | 29-08-2013 |
| | | | DE 102013000380 | A1 | 29-08-2013 |
| | | | EP    2631674 | A1 | 28-08-2013 |
| | | | WO   2013124018 | A1 | 29-08-2013 |
| US 3734631 | A | 22-05-1973 | DE     2225319 | A1 | 14-12-1972 |
| | | | JP     S522637 | B1 | 22-01-1977 |
| | | | US    3734631 | A | 22-05-1973 |
| WO 2008092611 | A1 | 07-08-2008 | DE 102007005187 | A1 | 04-09-2008 |
| | | | EP     2118680 | A1 | 18-11-2009 |
| | | | JP   2011511261 | A | 07-04-2011 |
| | | | US   2010182588 | A1 | 22-07-2010 |
| | | | WO   2008092611 | A1 | 07-08-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012024597
- DE 102013013664
- WO 2013124018 A
- DE 10001955 A1
- DE 10024156 A1
- DE 19839730 C1
- DE 930983 U1
- DE 10001943 C1

- DE 10346741 B3
- DE 102004025345 B3
- DE 102005013325 A1
- DE 102005010745 B3
- DE 102007005187 B4
- EP 2631674 A1
- DE 10001943 C2

**In der Beschreibung aufgeführte Nicht-Patentliteratur**

- **STÉPHANE MALLAT.** A Wavelet Tour of Signal Processing. Academic Press, 1997

- **STEPHANE MALLAT.** A Wavelet Tour of Signal Processing. Academic Press, 1997